# FASCICULE DE BREVET EUROPEEN

(11) **EP 1 843 986 B1**
(45) Date de publication et mention de la délivrance du brevet: **27.11.2013**
(21) Numéro de dépôt: 06709403.7
(22) Date de dépôt: 11.01.2006
(51) Int. Cl.: C04B 28/00, C04B 28/02, C04B 28/26

(54) **PROCEDE POUR FABRIQUER UN MATERIAU MINERAL SOLIDE**
VERFAHREN ZUR HERSTELLUNG EINES FESTEN MINERALISCHEN MATERIALS
METHOD OF PRODUCING A SOLID MINERAL MATERIAL

(30) Priorité: 11.01.2005 FR 0550097
(43) Date de publication de la demande: 17.10.2007
(73) Titulaire: Minealithe, 02240 Sissy (FR)
(72) Inventeur: VISOCEKAS, Fabrice, 75013 Paris (FR); WAENDENDRIES, François, 02240 Sissy (FR)
(74) Mandataire: Catherine, Alain
(86) Numéro de dépôt international: PCT/FR2006/050015
(87) Numéro de publication internationale: WO 2006/075118

(56) Documents cités:
- EP-A- 0 338 093
- EP-A- 0 507 368
- WO-A-02/24597
- WO-A-03/078349
- DE-A1- 3 622 568
- DE-A1- 10 205 728
- DE-A1- 19 600 977
- PATENT ABSTRACTS OF JAPAN vol. 2000, no. 08, 6 octobre 2000 (2000-10-06) & JP 2000 129258 A (MITSUBISHI MATERIALS CORP), 9 mai 2000 (2000-05-09) cité dans la demande
- PATENT ABSTRACTS OF JAPAN vol. 1998, no. 01, 30 janvier 1998 (1998-01-30) & JP 09 235147 A (KAWASAKI HEAVY IND LTD), 9 septembre 1997 (1997-09-09) cité dans la demande

## Description

### DOMAINE DE L'INVENTION

La présente invention se rapporte au domaine de la fabrication des matériaux minéraux solides dont les utilisations peuvent être très variées, par exemple pour la fabrication d'objets d'art, ou encore d'ornements ou d'éléments portants dans le domaine de l'architecture, ou encore des enduits ou des colles.

### ART ANTERIEUR

La réalisation de matériaux minéraux solides, en particulier pour la fabrication de pièces d'architecture, a été concrètement mise en oeuvre depuis de nombreux siècles, notamment pour la construction de nombreux édifices durant la période de l'Empire Romain, essentiellement à base de chaux aérienne ou hydraulique.

Ce n'est que beaucoup plus récemment, au cours du 18^{ième} siècle, que la maîtrise de la fabrication de matériaux minéraux solides a été à nouveau recherchée, cette fois à la lumière des connaissances nouvelles de la chimie moderne. Cette seconde ère de conception et de fabrication de matériaux minéraux solides a abouti à la mise au point de divers ciments obtenus par chauffage à haute température de combinaison de minéraux naturels extraits de carrière, principalement des calcaires et des argiles. L'étape de chauffage à haute température de ces combinaisons de minéraux naturels a permis la préparation d'un matériau de ciment qui réagit au contact de l'eau, afin de former un matériau minéral solide possédant de bonnes qualités de résistance mécanique.

Le ciment le plus employé dans l'industrie est le ciment dit « Portland » qui est un mélange de silicate et d'aluminate de calcium résultant de la combinaison de la chaux [CaO] avec la silice [SiO₂], l'alumine [Al₂O₃] et l'oxyde de fer [Fe₂O₃].

A de très rares exceptions près, la chaux nécessaire est apportée par des roches carbonatées et l'alumine, la silice et l'oxyde de fer sont apportés par des argiles. Dans la pratique, les calcaires et les argiles sont extraits des carrières, puis concassés et homogénéisés avant leur cuisson à haute température, à environ 1450°C, afin de produire un « clinker » qui est ensuite refroidi, par exemple par trempage, puis broyé en vue d'obtenir un ciment prêt à l'emploi. Le clinker comprend essentiellement du silicate tricalcique [C₃S 3CaO.SiO₂], du silicate bicalcique [C₂S₂CaO.SiO₂] ainsi qu'une phase interstitielle formée d'aluminate tricalcique [C₃A 3CaO.Al₂O₃] et d'alumino-ferrite [C₄AF], parfois partiellement vitreux, en particulier dans le cas d'une trempe énergique provoquant un refroidissement rapide.

Dans l'état de la technique, on a recherché diverses voies alternatives au ciment pour la fabrication de matériaux minéraux solides en vue d'utilisations diverses, notamment par la mise au point de procédés n'impliquant pas d'étapes obligatoires de chauffage à haute température.

On a notamment décrit des procédés de fabrication de matériaux minéraux solides par mélange d'un oxyde d'alumino-silicate dans une solution aqueuse de silice colloïdale ou de polysilicate alcalin, avec les bases fortes NaOH ou KOH, comme cela est décrit notamment dans la demande de brevet français N°2.659.319. Diverses alternatives ou perfectionnement au procédé décrit dans la demande de brevet français N°2.489.290 sont décrites notamment dans les demandes PCT N°WO 82/00 816, N°WO 91/13.840, N°WO 92/04 298, N°WO 95/13.995, N°WO 96/28398 et N°WO 98/31644.

Les procédés ci-dessus permettent de préparer de manière satisfaisante des matériaux minéraux solides qui sont exempts d'additif d'adhésion du type ciment ou autre agent liant du type glue, gomme, acides gras ou résine de synthèse. Toutefois, dans la pratique, il s'avère qu'avec certains de ces procédés, l'obtention d'un matériau minéral solide final homogène implique la mise en oeuvre d'une étape de séchage et de durcissement à l'abri de toute exposition à l'air de l'atmosphère, par exemple par immersion du produit intermédiaire mis en forme dans un liquide tel que de l'eau.

On peut aussi citer les matériaux décrits dans la demande de brevet japonais n° JP 2000129258, obtenus par mélange d'effluents industriels incinérés contenant du CaO et des sels alcalins avec un ciment et/ou du gypse, ou encore ceux décrits dans la demande de brevet japonais n° JP 09235147, obtenus par mélange de cendres contenant du CaO et du CaSO₄ avec une source de chaux, de silice et/ou du gypse.

De nombreux autres travaux ont été entrepris dans l'état de la technique en vue de produire des matériaux minéraux solides, en utilisant une grande variété de combinaisons de produits de départ.

Le brevet US 4,642,137 décrit une composition de liant pour ciment Portland constitué d'un mélange de scories, de schiste ou d'argile calcinés, de silice amorphe, d'un silicate de potassium dissous et d'un hydroxyde de potassium.

Le brevet européen n° EP 452 913 décrit une composition destinée à la construction de routes comprenant un mélange de silicate avec une roche carbonatée et un régulateur de basicité.

La demande de brevet allemand n° DE 196 00977 décrit une mousse pâteuse comprenant le mélange d'un silicate, d'un durcisseur, qui est une préparation alcaline, et d'un agent moussant qui est une combinaison acido/basique.

La demande de brevet allemand n° DE 23 56524 décrit un liant pour la fabrication d'un matériau minéral solide basaltique, à l'aide d'un silicate alcalin dissous et de phosphate ou de borate.

La demande de brevet européen EP0338093 décrit un procédé pour fabriquer des matériaux en pierre artificielle, ledit procédé comprenant une étape consistant à mélanger un ou plusieurs silicates avec du carbonate de calcium, suivie d'une étape consistant à ajouter une solution aqueuse acide de pH 1-4.

L'extrême diversité des combinaisons de produits et des procédés décrits dans l'art antérieur en vue de fabriquer des matériaux minéraux solides illustre le caractère essentiellement empirique de leur mise au point, et donc aussi le caractère très étroit et ponctuel de leur enseignement pour l'homme du métier.

### DESCRIPTION DE L'INVENTION

Le demandeur a cherché à mettre au point un procédé de fabrication d'un matériau minéral solide qui soit alternatif ou amélioré par rapport aux procédés connus.

En particulier, le demandeur s'est attaché à la mise au point d'un procédé pour fabriquer des matériaux minéraux solides qui peuvent être mis en forme par tout type de technique connue, tel que par coulage, moulage, modelage, damage, injection ou encore coffrage, préalablement à l'étape de durcissement.

Notamment, le demandeur a cherché à mettre au point un procédé de fabrication d'un matériau minéral solide dont l'étape de durcissement puisse être réalisée à la pression atmosphérique et à température ambiante ou par chauffage modéré.

Egalement, le demandeur a recherché la mise au point d'un procédé unique qui permette la fabrication de matériaux minéraux solides de compositions variées, et donc de caractéristiques mécaniques et d'aspects esthétiques très divers, selon l'utilisation ou l'application qui est recherchée pour l'objet solide final.

A la suite de longues recherches, le demandeur a mis au point un procédé nouveau de préparation d'un liant hydraulique minéral comprenant au moins (i) du silicium, (ii) de l'aluminium et (iii) du calcium et/ou du magnésium.

La présente invention a pour objet un procédé pour fabriquer un matériau minéral solide selon la revendication 1.

De manière générale, l'étape a) du procédé ci-dessus est réalisée sans apport externe de chaleur. L'étape a) est réalisée généralement à la température du laboratoire, c'est à dire à une température allant de 15°C à 35°C, mieux de 19°C à 30°C.

Sans vouloir être lié par une quelconque théorie, le demandeur pense qu'à l'étape a) du procédé ci-dessus, la combinaison de (i) de certains ions, par exemple des ions sodium ou potassium ou lithium éventuellement présents, (ii) d'ions carboxyliques, et (iii) de minéraux comprenant du silicium, de l'aluminium, du calcium et/ou magnésium, en présence d'eau, est essentielle à l'obtention d'un produit final solide dans lequel ces divers composants sont retrouvés sous forme agglomérée, ledit produit final solide ayant l'aspect d'une roche naturelle.

L'un des composants essentiels utilisé selon le procédé est la composition de pâte qui est fournie à l'étape a1), qui comprend la combinaison (i) d'une source de silicium et (ii) d'une base minérale. La composition de pâte fournie à l'étape 1) conserve une texture homogène, même après une déshydratation provoquée par une longue période de stockage, par exemple à l'air ; ainsi ladite pâte, en s'asséchant ne conduit pas à la formation exclusive d'un solide granulaire. La composition de pâte fournie à l'étape a1) possède l'avantage de pouvoir être préparée en grande quantité, puis conservée pendant une longue période de temps, par exemple plusieurs mois à température ambiante, avant son emploi. Si nécessaire, après un stockage de plusieurs mois, la composition de pâte fournie à l'étape a1) peut être réhydratée avant son emploi pour la mise en oeuvre du procédé, avec une quantité d'eau appropriée pour obtenir le degré de viscosité désiré.

Un autre composant essentiel utilisé selon le procédé est la composition qui résulte de la combinaison ou du mélange de la composition de pâte fournie à l'étape a1) avec la composition fournie à l'étape a2).

Selon un mode de réalisation préféré du procédé de l'invention, on utilise, pour préparer la composition fournie à l'étape a1), un ou des matériaux comprenant de la silice hydratée [Si(OH)₄], avec lesquels les meilleurs résultats sont obtenus.

Comme matériaux comprenant un composé ou une combinaison de composés de silicium du type silice hydratée [Si(OH)₄], on utilise les matériaux comprenant de l'opale ou de la calcédoine. Préférentiellement, on utilise des matériaux choisis parmi la diatomite, la radiolarite, l'opale, la gaize, le silex, la meulière, le jaspe, l'agate, le « chert », la lutécite, la calcédonite, la quartzine, le bois fossile, et la calcédoine. Ces matériaux sont préférentiellement utilisés sous forme d'une poudre, qui est combinée à l'étape a1) avec au moins une base minérale.

La base minérale est préférentiellement choisie parmi un hydroxyde de sodium, un hydroxyde de potassium, un hydroxyde de lithium, du carbonate de sodium, (Na₂CO₃; Na₂CO₃.10H₂O) du carbonate de potassium (K₂CO₃ ) et du carbonate de lithium (Li₂CO₃).

De manière tout à fait préférée, la base minérale est choisie parmi un hydroxyde de sodium, un hydroxyde de potassium et un hydroxyde de lithium.

Pour préparer la composition de pâte fournie à l'étape a1) avec un matériau comprenant de la silice hydratée, [Si(OH)₄], on met en contact la poudre du ou des matériaux comprenant de la silice hydratée avec la ou les bases minérales, à pression atmosphérique, et à une température allant de 20°C à 120°C de préférence à une température allant de 50°C à 120°C, en présence d'eau. Dans ce mode de réalisation particulier, on utilise préférentiellement des bases choisies parmi NaOH, KOH, LiOH. La ou les bases minérales sont généralement utilisées sous forme liquide. On ajoute de l'eau au mélange, dans des quantités qui sont déterminées par l'homme du métier, par de simples essais de routine. La poudre solide et le ou les liquides sont malaxés jusqu'à l'obtention d'une composition de pâte d'aspect homogène et ayant une consistance variable selon les quantités de liquide ajoutées. La composition de pâte fournie à l'étape a1) peut être de consistance liquide ou semi-liquide, ou bien posséder la consistance d'une pâte ferme. La composition de pâte fournie à l'étape a1) comprend, en plus du silicium apporté par la silice hydratée et les éléments alcalins apportés par la ou les bases minérales, de nombreuses autres espèces chimiques dérivées des matériaux de départ utilisés pour préparer la composition. Ainsi, la composition fournie à l'étape a1) consiste en un matériau minéralogique liquide ou pâteux qui peut être d'une composition chimique complexe.

Dans d'autres modes de réalisation du procédé de l'invention, on utilise, pour préparer la composition fournie à l'étape a1), un ou plusieurs matériaux comprenant une silice anhydre [SiO₂]. Selon ces autres modes de réalisation, on prépare la composition fournie à l'étape a1) par mise en contact de la poudre du ou des matériaux comprenant de la silice anhydre avec la ou les bases minérales, à une pression supérieure à la pression atmosphérique, et à une température supérieure à 120°C. A titre illustratif, une telle composition fournie à l'étape a1) peut être obtenue en réalisant une fusion de la silice anhydre et d'un carbonate choisi parmi Na₂CO₃, K₂CO₃ et Li₂CO₃. à haute température, de préférence à une température allant de 600°C à 1300°C. A 1300°C, un verre est obtenu puis liquéfié par passage en autoclave, par exemple à une température d'au moins 150°C, mieux de 180°C à 200°C, et à une pression de 10⁵ à 3.10⁵ Pa, pendant une durée généralement de plusieurs heures, suivant les quantités. Egalement à titre illustratif, à 800°C, le produit obtenu est broyé, puis mélangé à de l'eau liquide à une température inférieure à 120°C, température de vaporisation de l'eau, pendant une durée allant de quelques minutes à quelques heures. Ce liquide est constitué de silice dissoute en milieu alcalin. Dans certains modes de réalisation, le liquide résultant est utilisé directement comme composition de l'étape a1), pour réaliser le procédé de l'invention. Dans d'autres modes de réalisation, le liquide résultant est d'abord filtré afin d'éliminer les particules solides qu'il est susceptible de contenir. Le filtrat liquide est alors utilisé comme composition de l'étape a1) pour réaliser le procédé de l'invention.

De manière générale, les composés à base d'acide organique utilisés à l'étape a2) du procédé consistent en des sources d'ions acides qui sont apportés dans la composition finale de la pâte aqueuse minérale qui est obtenue à l'étape a4). Ainsi, selon le type de composé qui est utilisé, on fournit à la pâte aqueuse ou encore des ions acides organiques, principalement carboxyliques [COO].

Des ions sulfates peuvent être apportés, à l'étape a2) par la présence d'acide sulfurique ou encore par la présence de sels de sulfate alcalins tel que le sulfate de sodium [Na₂SO₄], de sels de sulfate alcalino-terreux tel que le gypse [CaSO₄, 2H₂O] et la baritine [BaSO₄], ou encore de sels de sulfate métalliques tel que le sulfate de cuivre [CuSO₄], ou encore l'alunite.

Les ions acides organiques peuvent être apportés, à l'étape a2), par la présence d'un acide organique ou d'un sel d'acide organique comprenant une ou plusieurs fonctions carboxyle [COO].

Selon leur nature, les composés sources d'ions acides utilisés à l'étape a2) se présentent sous forme liquide ou sous forme solide, préférentiellement sous forme de poudre, ce que l'homme du métier peut déterminer à l'aide de ses connaissances générales techniques. Un sel d'acide organique, comme par exemple le tartrate de potassium, peut être utilisé sous la forme d'une poudre solide ou encore sous forme dissoute en solution aqueuse. Une source d'ions sulfates tel qu'un sulfate de calcium, ou un composé minéral comprenant du sulfate de calcium tel que le gypse, est utilisé sous la forme d'une poudre, par exemple une poudre de gypse. On comprend que le terme « composé », utilisé pour définir les caractéristiques de l'étape a2) du procédé, englobe un matériau minéral source d'ions acides.

Par « poudre », on entend selon l'invention un matériau solide qui se présente sous la forme de particules. Une poudre selon l'invention peut être caractérisée, notamment, par sa taille de particule.

Par « taille de particule » d'une poudre utilisée dans le procédé de l'invention, on entend la taille de particule telle que, dans un échantillon de ladite poudre, il y ait autant de poids de particules qui possèdent une taille inférieure à la « taille de particule » que de poids de particules qui possèdent une taille supérieure à la « taille de particule ». La taille de particule d'une poudre selon l'invention peut être aisément vérifiée par l'homme du métier, par exemple à l'aide de techniques de tamisage avec une succession de tamis de taille de maille calibrée de plus en plus petite. De telles techniques sont parfaitement conventionnelles pour mesurer la taille de particule de solides minéraux, notamment la taille de particule d'échantillons de roche, y compris de sable ou de gravier. On trouve dans le commerce des tamis dont la taille de maille varie considérablement, par exemple des tamis dont la taille de maille peut être de 0,001 mm jusqu'à des tamis dont la taille de maille est de plusieurs centimètres.

Pour la mise en oeuvre du procédé de l'invention, on utilise des poudres dont la taille de particules peut être très variée, notamment selon l'aspect esthétique qui est recherché pour l'objet final. En général, la taille de particule des poudres des différents matériaux utilisés dans le procédé peut varier, selon le matériau et selon le type de pâte aqueuse que l'on souhaite obtenir, dans une gamme variant de 1 µm à 10 cm, y compris de 10 µm à 1 cm.

Selon un premier mode de réalisation de l'étape a2), qui est désigné a2-1) dans la présente description, on fournit à cette étape une composition constituée exclusivement d'un composé ou d'une combinaison de composés apportant des ions acides.

Selon un second mode de réalisation de l'étape a2), qui est désigné a2-2) dans la présente description, on fournit à cette étape une composition obtenue par mélange d'un composé ou d'une combinaison de composés apportant des ions acides et d'au moins une base minérale ou organique. A l'étape a2-2), la ou les bases minérales peuvent être choisies parmi un hydroxyde de sodium, un hydroxyde de potassium, un hydroxyde de lithium, du carbonate de sodium (Na₂CO₃ ; Na₂CO₃.10H₂O, du carbonate de potassium (K₂CO₃) et du carbonate de lithium (Li₂CO₃). La base organique peut être de l'ammoniaque [NH₄⁺].

A l'étape a2), c'est à dire soit à l'étape a2-1), soit à l'étape a2-2), on peut ajouter à la composition qui est fournie, également un ou plusieurs composés acides minéraux additionnels, par exemple des composés minéraux comprenant des radicaux phosphate [PO₄³⁻], nitrate [NO₃⁻], fluorure [F⁻] et chlorure [Cl⁻], notamment les sels formés avec ces ions, tels l'apatite Ca₅(PO₄)₃ (OH, F, Cl), le salpêtre KNO₃, le spath fluor Ca F₂ et le sel commun NaCl.

Les composés acides minéraux additionnels peuvent être choisis parmi l'acide fluorhydrique [HF], acide chlorhydrique [HCl] , l'acide phosphorique [H₃PO₄] et l'acide nitrique [HNO₃].

A l'étape a3), on fournit une composition comprenant un minéral ou une combinaison de minéraux, le ou les minéraux étant choisis de telle manière à ce que la pâte qui est obtenue à la fin de l'étape a4), qui résulte de la combinaison des composés ou compositions fournis aux étapes a1) à a3), comprenne au moins (i) du silicium, sous forme de silice anhydre, (ii) de l'aluminium et du calcium et/ou du magnésium.

Dans de nombreux modes de réalisation du procédé selon l'invention, la composition fournie à l'étape a3) comprend de l'eau.

Comme cela sera détaillé dans la suite de la description, la composition fournie à l'étape a3) peut comprendre un ou plusieurs composés ou matériaux additionnels, autres que des silicates, des aluminates et des carbonates.

A l'étape a3), on peut par exemple utiliser, selon les modes de réalisation des étapes a1) et a2), les matériaux minéraux cristallins ou amorphes suivants choisis parmi les silicates, les aluminates et les carbonates, seuls ou en combinaison :
- des silicates constitués de silice pure, tels que le quartz, la cristoballite, la trymidite, la coésite ou de la silice amorphe,
- des aluminosilicates, y compris (i) les argiles naturelles et les argiles cuites appartenant aux groupes de la kaolinite, l'illite, la smectite, la vermiculite, ou encore le métakaolin, la terre cuite, (ii) les feldspaths tels que les feldspaths potassique ou plagioclase, les micas telle que la muscovite, (iv) les verres volcaniques tels que l'andésite, le basalte et la pouzzolane, ou encore (v) les schistes telle que l'ardoise, (vi) les zéolithes, (vii) les grenats et (viii) certaines amphiboles.
- des silicates alcalino-terreux tels que le talc, la serpentine, l'amiante, la wollastonite, les pyroxènes, l'olivine, et certaines amphiboles ;
- des aluminates tels que la gibbsite, l'alumine et le diaspore.
- des carbonates alcalins ou alcalino-terreux tels que la calcite, la dolomite, la magnésite et le natron ; et
- des carbonates métalliques tels que la malachite et la rhodocrosite.

Le minéral ou la combinaison de minéraux fournis à l'étape a3) sont en général présentés sous la forme d'une poudre dont la taille de particules varie de 1 µm à 10 cm, mieux de 10 µm à 5 mm, et encore mieux de 10 µm à 1 mm. On utilise une poudre dont la taille de particules varie de 1 µm à 1 mm lorsqu'on met en oeuvre un minéral obtenu par broyage mécanique à partir d'une roche. On utilise une poudre dont la taille de particules est de l'ordre de 1 cm, lorsqu'on met en oeuvre un minéral en poudre grossière résultant du délitement naturel de la roche.

On comprend qu'à l'étape a3) on peut fournir une combinaison de minéraux dont chaque minéral possède une granulométrie spécifique, distincte de la granulométrie d'au moins un autre minéral de ladite combinaison. Il en résulte que la composition fournie à l'étape a3) peut comprendre des particules dont la distribution de taille est très hétérogène.

La composition fournie à l'étape 3) peut, dans certains modes de réalisation, comprendre aussi une base minérale ou organique, ou encore une combinaison de bases minérales et/ou organiques.

De manière surprenante, on a montré selon l'invention qu'en combinant au moins les compositions fournies aux étapes a1), a2) et a3), on obtenait un matériau minéral solide en procédant à une simple étape de durcissement par séchage à pression atmosphérique, en milieu confiné ou en contact avec l'air.

De manière tout aussi surprenante, on a montré que la combinaison minimale réalisée à l'étape a4) ci-dessus permettait la réalisation d'une pâte minérale aqueuse, de consistance variée selon la proportion de liquide que cette pâte comprend, à laquelle pouvaient être ajoutés un composé minéral ou une combinaison de composés minéraux additionnels capables de conférer au produit final des caractéristiques de résistance mécanique ou des caractéristiques esthétiques variées et contrôlables.

De plus, grâce au procédé défini ci-dessus, un matériau minéral solide peut être obtenu sans ajouter aux compositions fournies aux étapes a1) à a3) un quelconque additif d'adhésion supplémentaire parmi ceux qui sont couramment utilisés dans les procédés antérieurs de fabrication de matériaux minéraux solides appelés parfois « pierre artificielle ». Ainsi, à l'étape a) du procédé, la pâte réalisée à l'étape a4) peut être exempte de tout additif d'adhésion, notamment de tout additif d'adhésion du type ciment, y compris le ciment Portland, ainsi que de tout additif d'adhésion de type acide gras ou résine. En particulier, à l'étape a4) du procédé, la pâte obtenue peut être exempte de toute résine à base d'huile animale ou végétale, notamment d'huile de résine telle que la colophane, la résine de pin, la résine de daunmara, la gomme de kauri, la résine d'ambre ou encore l'huile de copal. De même, la pâte obtenue à l'étape a4) du procédé peut être exempte de tout additif d'adhésion consistant en un corps gras solide ou liquide, notamment des acides gras ou encore des glycérides telles que l'oléine, la stéarine ou la linoléine. Egalement, la pâte obtenue à l'étape a4) peut être exempte de résine à base d'un ou plusieurs polymère ou copolymère de synthèse, notamment de silicone, de polyester, de polyacrylate, de polyméthacrylate, de polyméthylméthacrylate ou encore de tout autre polymère ou copolymère de synthèse, en particulier les polymères ou copolymères réticulables.

Comme cela est illustré dans les exemples, et quel que soit le mode de réalisation du procédé qui a été mis en oeuvre, l'étape c) de durcissement est couramment réalisée à une température inférieure à 70°C. Dans de nombreux cas, la pâte minérale aqueuse qui a été préalablement mise en forme à l'étape b) peut être durcie à l'étape c) par séchage à température ambiante, ou encore par chauffage très modéré à une température inférieure à 40°C, comme cela est illustré dans les exemples.

Selon le type de combinaison de compositions utilisé au début de l'étape a4) et/ou leurs proportions relatives dans le mélange ainsi que la quantité globale d'eau qui est utilisée pour préparer la pâte aqueuse finale, l'homme du métier détermine, par de simples essais de routine, quelles sont les conditions optimales de mise en oeuvre de l'étape c) de durcissement, en particulier les conditions de température de durcissement. Pour une pâte aqueuse donnée réalisée à l'étape a), l'homme du métier peut faire varier les conditions de température, dans les limites indiquées ci-dessus, ainsi que les conditions de durée, par de simples essais de routine. Ainsi, si un durcissement rapide de la pâte aqueuse est recherché, l'étape c) de durcissement pourra être réalisée à une température supérieure à la température qui est appliquée lorsque l'étape c) est réalisée sans contrainte de durée. De même, la durée de durcissement varie en fonction de la quantité globale d'eau qui est fournie aux étapes a1) et a2) pour réaliser la pâte aqueuse finale.

En général, pour 100 parties en poids de la pâte aqueuse finale obtenue à l'étape a4), ladite pâte aqueuse comprend une quantité d'eau allant de 5 à 50 parties en poids, et le plus souvent de 5 à 30 parties en poids. Dans la plupart des cas, pour 100 parties en poids de la pâte aqueuse finale, ladite pâte aqueuse comprend une quantité d'eau qui varie de 10 à 30 parties en poids.

Les quantités de compositions fournies aux étapes a1), a2) et a3) peuvent être très variées, comme cela est illustré dans les exemples et peuvent néanmoins permettre la réalisation d'un matériau minéral solide.

Toutefois, de préférence, la quantité de la composition fournie à l'étape a2) n'est pas inférieure à 0,5 partie en poids, mieux n'est pas inférieure à 5 parties en poids, pour 100 parties en poids de la pâte aqueuse finale obtenue à l'étape a4).

De préférence, la quantité de la composition fournie à l'étape a3) n'est pas inférieure à 0,5 partie en poids, mieux n'est pas inférieure à 5 parties en poids, pour 100 parties en poids de la pâte aqueuse finale obtenue à l'étape a4).

De préférence, la quantité de la composition fournie à l'étape a1), n'est pas inférieure à 0,5 partie en poids, mieux n'est pas inférieure à 5 parties en poids, pour 100 parties en poids de la pâte aqueuse finale obtenue à l'étape a4).

Dans certains modes de réalisation de l'étape a4) du procédé, (a) on mélange d'abord les compositions fournies aux étapes a1) et a3), puis (b) on ajoute (i) soit la composition fournie à l'étape a2-1), (ii) soit la composition fournie à l'étape a2-2).

Dans encore d'autres modes de réalisation de l'étape a4), du procédé, toute ou une partie des minéraux fournis à l'étape a3) sont mélangés séparément aux compositions fournies aux étapes a1) et a2), puis les deux mélanges respectifs sont réunis à la fin de l'étape a4).

Dans encore d'autres modes de réalisation du procédé, on mélange d'abord les compositions fournies aux étapes a1) à a2), puis on ajoute dans un second temps la composition fournie à l'étape a3).

En général, pour les températures indiquées ci-dessus, l'étape c) de durcissement peut être réalisée pendant une durée de 2 minutes à 100 heures, afin d'obtenir le produit final à l'état solide.

Afin d'obtenir un objet minéral solide dont les caractéristiques mécaniques n'évoluent plus au cours du temps, l'étape c) de durcissement peut-être suivie d'une étape d) de prise ou consolidation finale dont la durée peut varier jusqu'à plusieurs semaines, par exemple 5 à 6 semaines. En général, l'étape d) de prise ou consolidation finale est réalisée à température ambiante ou modérée, par exemple à une température variant de 20°C à 60°C.

Selon le procédé de l'invention, l'étape c) de durcissement ne nécessite aucune protection de l'objet mis en forme à l'étape b), vis-à-vis d'un contact avec l'air.

Ainsi, selon un premier aspect, l'étape c) de durcissement est réalisée au contact de l'air de l'atmosphère. Selon cet aspect, l'étape c) de durcissement peut être réalisée au contact de l'air de l'atmosphère à température ambiante. Selon ce même aspect, lorsque l'étape c) de durcissement est réalisée à une température supérieure à la température ambiante, l'étape c) de durcissement peut être réalisée dans l'enceinte d'un four ou d'une étuve. En particulier, le demandeur a observé qu'un vernis pouvait être formé préférentiellement sur la ou les faces de l'objet qui avait durci sur la ou les faces de l'objet durci qui était directement en contact avec l'air, lors de la réalisation de l'étape c) de durcissement.

Selon un autre aspect, l'étape c) de durcissement peut être réalisée en atmosphère confinée à température ambiante, sans circulation d'air venant de l'atmosphère extérieure y compris par immersion complète de la pâte mise en forme dans de l'eau.

Selon le type d'objet final que l'on veut obtenir, l'étape c) de durcissement, qui est éventuellement suivie de l'étape d) de prise ou consolidation finale, peut être suivie d'une étape e) de cuisson de l'objet minéral solide. L'étape de cuisson est préférentiellement réalisée à une température d'au plus 1500°C. L'étape de cuisson facultative consiste en l'étape e) du procédé, que ce procédé comprenne ou ne comprenne pas l'étape d) facultative préalable de prise ou consolidation finale.

L'étape e) de cuisson peut être réalisée dans l'enceinte d'un four muni d'évents d'aération, qui peuvent être ouverts ou fermés.

En général, on procède à l'étape e) de cuisson après durcissement, et éventuellement prise ou consolidation finale, afin d'obtenir une vitrification en surface de l'objet durci, vitrification qui s'apparente à un émail ou à un verre, notamment pour la fabrication de carrelage, de bijoux, d'objets décoratifs, d'éléments sanitaires etc..

A titre illustratif, à l'étape a), le rapport en poids de la composition fournie à l'étape a1) par rapport au poids total des matériaux fournis à l'étape a2) et a3) peut varier de 1/10 à 1/0,1.

Comme cela a déjà été décrit, les rapports en poids des différentes compositions fournies aux étapes a1), a2) et a3), pour former la pâte aqueuse qui est réalisée à l'étape a4) du procédé, peuvent considérablement varier selon le type de matériau minéral solide dont la fabrication est envisagée. Pour la détermination des proportions des divers composés utilisés pour réaliser la pâte aqueuse, à l'étape a4) du procédé, l'homme du métier peut, par de simples essais de routine, déterminer les proportions optimales de ces composés, en fonction du but poursuivi, à l'aide des nombreux modes de réalisation du procédé de l'invention qui sont illustrés dans les exemples.

Divers autres aspects du procédé de l'invention sont décrits ci-dessous.

Dans certains modes de réalisation du procédé, celui-ci est caractérisé en ce qu'à l'étape a1), ou à l'étape a3), le ou les matériaux comprenant un composé ou une combinaison de composés de silicium du type silice anhydre (SiO₂) sont choisis parmi le quartz, la trymidite, la cristoballite, la coesite, ou de la silice amorphe.

Dans certains modes de réalisation du procédé, celui-ci est caractérisé en ce que le quartz est choisi parmi le cristal de roche, l'améthyste, le quartz rose, le quartz enfumé, le quartz cirin, le quartz laiteux, le prasiolite, l'aventurine, et le quartz fibreux.

Dans certains modes de réalisation du procédé, celui-ci est caractérisé en ce que le ou les matériaux comprenant un composé ou une combinaison de composés de silicium du type silice anhydre (SiO₂) sont choisis parmi un silicate amorphe, notamment un silicate amorphe d'origine volcanique, comprenant plus de 20% en moles de SiO₂, par rapport au nombre total de moles dudit silicate.

Dans certains modes de réalisation du procédé, celui-ci est caractérisé en ce que le ou les matériaux comprenant un composé ou une combinaison de composés de silicium du type silice anhydre (SiO₂) sont choisis parmi la kaolinite Al₂Si₂O₅(OH)₄ le metakaolin 2SiO₂ Al₂O₃, la prenhite Ca₂(Al) [AlSi₃O₁₀](OH)₂, l'illite KaI₄ [Si₇AlO₂₀] (OH)₄, la smectite (1/2 Ca, Na)_{0.7} (Al₄[(Si, Al)₈ O₂₀] (OH)₄.nH₂O, la vermiculite (Mg, Ca)_{0.6} Al₆ [(SiAl)₈O₂₀](OH)₄.nH₂O, l'andalousite Al₂SiO₅, l'apophyllite KCa₄F(Si₄O₁₀)₂ 8H₂O], le béryl Al₂Be₃Si₆O₁₈, la chrysocolle CuSiO₃.nH₂O, la dioptase CuSiO₂(OH)₂, le disthène Al₂SiO₅, la mullite Al₄Si₂O₁₀, l'olivine (MgFe)₂(SiO₄), la serpentine Mg₆Si₄O₁₀(OH)₈, la titanite CaTiSiO₅, la stéatite Mg₃(OH)₂Si₄O₁₀, le zircon ZrSiO₄, la wollastonite CaSiO₃, et le talc Mg₃Si₄O₁₀.(OH)₂.

Dans certains modes de réalisation du procédé, celui-ci est caractérisé en ce que le ou les matériaux comprenant un composé ou une combinaison de composés de silicium du type silice anhydre (SiO₂) consistent en un feldspath choisi parmi les feldspaths orthoclases KAlSi₃O₈ y compris l'orthose, microcline et sanidine, les feldspaths plagioclases y compris l'albite NaAlSi₃O₈ et l'anorthite CaAl₂Si₂O₈.

Dans certains modes de réalisation du procédé, celui-ci est caractérisé en ce que le ou les matériaux comprenant un composé ou une combinaison de composés de silicium du type silice anhydre (SiO₂) consistent en un feldspathoïde y compris la néphéline (Na₃,K)AlSiO₄, la kalsilite SiAlO₄K, la cancrinite ou la vishnevite (Na,Ca,K)₆₈[Si₆Al₆O₂₄][(SO₄,CO₃,Cl,OH]₁₋₂.nH₂O, la leucite KAlSi₂O₆, l'analcite NaAlSi₂O_{6.}H₂O, la sodalite Na₈Si₆Al₆O₂₄Cl₂, l'haüyne (Na,Ca)₄₈[Si₆Al₆O₂₄](SO₄)₁₋₂, la lazurite (Na,Ca)₄₋₈[Si₆Al₆O₂₄](SO₄,S) et la noséane Na₈[Si₆Al₆O₂₄](SO₄).

Dans certains modes de réalisation du procédé, celui-ci est caractérisé en ce que le ou les matériaux comprenant un composé ou une combinaison de composés de silicium du type silice anhydre (SiO₂) consistent en un pyroxène choisi parmi un orthopyroxène y compris l'enstatite MgSiO₃, l'aegyrine NaFeSi₂O₆, la pigeonite (Mg, Fe, Ca) (Mg, Fe)Si₂O₆ et le ferrosilite FeSiO₃, un clinopyroxène y compris le diopside CaMgSi₂O₆, l'augite (Ca,Fe,Mg)(Si,Al)₂O₆, la jadéite NaAlSi₂O₆ et un spodumène LiAlSi₆O₆.

Dans certains modes de réalisation du procédé, celui-ci est caractérisé en ce que le ou les matériaux comprenant un composé ou une combinaison de composés de silicium du type silice anhydre (SiO₂) consistent en un mica tel que la biotite K(Fe,Mg)₃AlSi₃O₁₀(OH,F)₂, la muscovite KAl₂(AlSi₃O₁₀)(OH,F)₂, la bromomuscovite KAl₂BSi₃O₁₀(OH,F)₂, l'hydrobiotite K(Mg,Fe)₉(Si,Al)₈O₂₀(OH)₄.nH₂O, la phlogopite KMg₃(AlSi₃O₁₀)(F,OH)₂, la lepidolite KLi₂Al(OH,F)₂AlSi₃O₁₀, la zinnwaldite KLiFeAl(OH,F)₂, la glauconite (K, Ca, Na)_{1,6} (Fe, Al, Mg)₄ Si_{7,3} Al_{0,7} O₂₀ (OH)₄ et la paragonite Na₂Al₄ [Si₆ Al₂O₂₀] (OH)₄.

Dans certains modes de réalisation du procédé, celui-ci est caractérisé en ce que le ou les matériaux comprenant un composé ou une combinaison de composés de silicium du type silice anhydre (SiO₂) consistent en un grenat, tel qu'un grenat parmi l'almandin Fe₃Al2(SiO₄)₃, l'andraldite Ca₃Fe₂(SiO₄)₃, le grossulaire Ca₃Al₂(SiO₄)₃, la pyrope Mg₃Al₂(SiO₄)₃, la spessartite Mn₃Al₂(SiO₄)₃ et l'ouvarovite Ca₃Cr₂(SiO₄)₃.

Dans certains modes de réalisation du procédé, celui-ci est caractérisé en ce que le ou les matériaux comprenant un composé ou une combinaison de composés de silicium du type silice anhydre (SiO₂) consistent en une scapolite (Na,Ca,K)₄[Al₃(Al,Si)₃Si₆O₂₄](Cl,CO₃,SO₄).

Dans certains modes de réalisation du procédé, celui-ci est caractérisé en ce que le ou les matériaux comprenant un composé ou une combinaison de composés de silicium du type silice anhydre (SiO₂) consistent en une zéolite (Na₂,K₂,Ca,Ba)[(Al,Si)O₂]ₙ.xH₂O.

Dans certains modes de réalisation du procédé, celui-ci est caractérisé en ce que le ou les matériaux comprenant un composé ou une combinaison de composés de silicium utilisés à l'étape a1), et éventuellement également à l'étape a3), se présentent sous la forme de silice extraite à partir d'une plante telle que la prêle (*Equisetum arwense*), la fougère, la paille de riz, le roseau, le papyrus et les plantes céréalières tels que le blé ou l'orge.

Préférentiellement, à l'étape a1), la base minérale est choisie parmi un hydroxyde de sodium, un hydroxyde de potassium, un hydroxyde de lithium, du carbonate de sodium (Na₂CO₃ ou Na₂CO₃.10H₂O), du carbonate de potassium K₂CO₃ et du carbonate de lithium Li₂CO₃.

Préférentiellement, à l'étape a2) le sel de l'acide sulfurique consiste en un gypse [CaSO₄.2H₂O].

Préférentiellement, à l'étape a2), pour l'acide organique ou le sel d'acide organique, ledit acide organique consiste en un acide carboxylique choisi parmi les acides alkylcarboxyliques de 2 à 20 atomes de carbone et les acides arylcarboxyliques de 6 à 20 atomes de carbones.

Préférentiellement, les acides alkylcarboxyliques et arylcarboxyliques sont choisis parmi acide acétique [CH₃COOH], acide benzoïque [C₆H₅COOH], acide butanoïque [CH₃CH₂CH₂COOH], acide chloroacétique [ClCH₂COOH], acide citrique [HOOCC(OH)(CH₂COOH)₂], acide formique [HCOOH], acide fumarique [trans-HOOCCH-CHCOOH], acide glycolique [HOCH₂COOH], acide lactique [CH₃CH(OH)COOH], acide maléique [cis-HOOCCH-CHCOOH], acide malique [HOOCCH (OH)CH₂COOH], acide malonique [HOOCCH₂COOH], acide mandélique [C₆H₅CH5OH)COOH], acide o-phtalique [o-C₆H₄(COOH)₂], acide oxalique [HOOCCOOH], acide propanoïque [CH₃CH₂COOH], acide pyruvique [CH₃COCOOH], acide salicylique [o-C₆H₄(OH)COOH], acide succinique [HOOCCH₂CH₂COOH], acide tartrique [HOOCCH(OH)CH(OH)COOH], acide trichloroacétique [CCl₃CCOOH].

Préférentiellement, un sel d'acide organique peut être choisi parmi les sels des acides décrits ci-dessus y compris des sels de potassium ou de sodium. Sont inclus dans les sels d'acides organiques selon l'invention, le bicarbonate de sodium, le bicarbonate de potassium et le bitartrate de potassium.

Si l'on désire obtenir un objet final coloré, par exemple une céramique colorée après cuisson à haute température, on peut ajouter à l'étape a), en général à l'étape a3), différentes espèces chimiques métalliques, tels que Fe, Cu, Co, Mn, Cr, Zn, Ti, Pb, Ag ou encore Au. Lesdites espèces chimiques métalliques peuvent être ajoutées sous la forme de paillettes métalliques, d'oxydes métalliques purs ou encore sous la forme de minéraux les contenant, tels que des silicates, des carbonates, des aluminates, des sulfates, ou encore de sels métalliques, le cas échéant sous forme dissous dans un liquide. Dans ces modes de réalisation du procédé, on réalise alors une étape e) de cuisson à haute température, par exemple à une température supérieure à 700°C de plusieurs heures. Dans encore d'autres modes de réalisation du procédé, on ajoute à l'étape a), en général par addition à la composition fournie à l'étape a3), une certaine quantité de zinc, afin d'accroître les propriétés d'agglomération de la pâte finale obtenue à l'étape a4), et augmenter les caractéristiques de résistance mécanique du matériau minéral solide produit final du procédé, y compris la tenue du matériau minéral solide final vis-à-vis d'un contact avec l'eau ou une solution aqueuse. Le zinc peut être apporté par ajout d'oxyde de zinc [ZnO], en une quantité en poids qui peut être aisément déterminé par l'homme du métier, à l'aide de simples essais de routine. Par exemple, on peut ajouter à l'étape a) une quantité d'oxyde de zinc allant de 0, 1 % à 10% en poids, par rapport au poids total de la pâte finale obtenue à la fin de l'étape a4).

D'autres modes de réalisation particuliers du procédé de l'invention sont illustrés dans les exemples.

La présente invention a aussi pour objet une pâte minérale aqueuse pour réaliser un matériau minéral solide selon la revendication 29.

La pâte minérale aqueuse est obtenue par malaxage manuel ou mécanique.

Selon la quantité de liquide qui est globalement incorporée à l'étape a) du procédé, on obtient une pâte minérale aqueuse de consistance ferme, demi-ferme ou normale, c'est-à-dire dans le dernier cas d'une consistance similaire à celle de l'argile d'un potier. Pour des volumes plus importants de liquide ajouté à l'étape a) du procédé, on obtient une pâte minérale aqueuse semi-liquide ou liquide.

Le choix de la fluidité de la pâte minérale aqueuse dépend du type d'étape de mise en forme qui est réalisée à l'étape b) du procédé, des caractéristiques de résistance mécanique recherchées pour le matériau minéral solide final, de sa porosité ou encore de la finition de surface qui est désirée.

La fluidité de la pâte minérale aqueuse préparée à l'étape a) du procédé dépend de la proportion d'eau de gâchage mise en oeuvre, de la grosseur, de la forme et de la fonction des grains de la matière solide mise en pâte, de la nature des corps en dissolution ainsi que de la proportion des composés ajoutés qui, en se dissolvant dans l'eau, vont modifier la plasticité de la pâte.

De manière générale, la proportion d'eau de gâchage mise en oeuvre à l'étape a) du procédé est déterminée par l'homme du métier, par de simples essais de routine, afin d'obtenir des caractéristiques de retrait de la pâte moulée ou des caractéristiques de dilatation au chauffage qui sont adaptées à l'utilisation finale qui est envisagée. Dans certains cas, il est préférable d'utiliser de l'eau tiède, dont la température est inférieure à 99°C.

Comme cela a déjà été mentionné précédemment dans la présente description, l'étape b) de mise en forme peut être de tout type connu. La nature de l'étape b) de mise en forme dépend essentiellement du type d'objet final qui doit être produit. Ainsi, l'étape b) de mise en forme de la pâte minérale aqueuse peut consister en un coulage de la pâte dans un moule, y compris un moule poreux tel que le plâtre ou la terre cuite. Egalement, l'étape b) peut consister en une étape de coulage de la pâte minérale aqueuse sous forme semi-liquide, selon les techniques conventionnelles utilisées pour la fabrication d'objets de béton en dallage coffré ou entre banche, armé ou non , vibré ou non vibré. Egalement, l'étape b) de mise en forme peut consister en une étape de tassement dans un moule dur, tel qu'un moule de métal, de plâtre graissé, de bois, de pierre, etc. L'étape b) de mise en forme peut également consister en une étape de tassement dans un moule souple, tel qu'un moule en élastomère, un moule en silicone ou un moule en plastique.

De manière générale, après le coulage de la pâte minérale aqueuse dans un coffrage ou dans un moule, on procède à un tassement de la pâte selon les techniques conventionnelles, soit manuellement, soit à l'aide d'une frappe à la masse, soit encore par vibration.

A titre illustratif, la pâte minérale aqueuse, une fois introduite dans le moule, peut être vibrée selon différentes techniques, telles que sur un plateau vibrant, à l'aide d'une aiguille vibrante incorporée dans la masse de la pâte ou encore à l'aide d'un appareil mélangeur rotatif.

A titre illustratif, les techniques de moulage et de vibrage ci-dessus peuvent être utilisées pour fabriquer des matériaux minéraux solides destinés à être sculptés ou à être utilisés comme matériaux de construction tassés, en usine ou sur un chantier, c'est-à-dire sur le lieu de fabrication du matériau minéral solide.

Egalement à l'étape b) du procédé, la pâte minérale aqueuse, par exemple sous une forme semi-liquide, peut être tassée ou vibrée sur un support sur lequel la pâte va adhérer. Une telle technique peut être utilisée notamment pour la fabrication de matériaux minéraux solides de type dalle. Les dalles peuvent être ensuite apportées sur des parois en vue de la finition esthétique de la façade d'un bâtiment. La pâte minérale aqueuse peut également être utilisée pour fabriquer des matériaux solides qui pourront être incrustés à la surface ou bien dans la masse d'un objet en métal, en bois, en pierre, en plastique etc.

Selon une autre alternative, la pâte minérale aqueuse, lorsqu'elle se présente sous une forme peu fluide, peut être mise en forme, à l'étape b) du procédé, par tournage, selon une technique conventionnelle utilisée pour façonner l'argile en poterie, par exemple lorsque l'on désire fabriquer des objets décoratifs tels que des vases.

Selon encore une autre alternative, la pâte minérale aqueuse peut être modelée, par exemple pour la fabrication d'objets dans le domaine de la sculpture.

Selon encore une autre alternative, la pâte minérale aqueuse peut être utilisée pour le bouchement ou la réparation de défauts ou d'accidents, par exemple de fissures ou de lacunes, dans le domaine de la restauration d'édifices ou de restauration d'objets anciens constitués totalement ou en partie de pierre.

Selon une autre alternative, la pâte minérale aqueuse peut être également utilisée comme enduit, ciment de coulage ou comme colle minérale.

Selon encore un autre aspect, la pâte minérale aqueuse peut être utilisée pour fabriquer des moules en matériau minéral solide.

Egalement, la pâte minérale aqueuse peut être mise en forme par damage, par exemple pour la fabrication de dalles, parpaings et briques en matériaux minéraux solides, pour une utilisation dans les parties intérieures ou extérieures des bâtiments.

Selon une autre technique, la pâte minérale aqueuse, par exemple lorsqu'elle se présente sous la forme d'une pâte semi-dure, peut être tassée, puis sculptée avant l'étape c) de durcissement.

Egalement, la pâte minérale aqueuse peut être travaillée de manière à obtenir un aspect de surface désiré, par exemple un aspect esthétique mat. L'objet peut être poli.

Selon encore un autre aspect, l'objet final en matériau minéral solide peut être mis en forme, à l'étape b) du procédé, par injection de la pâte minérale aqueuse selon des techniques conventionnelles, par exemple par injection sous vide ou par injection à pression atmosphérique, ou encore par injection sous haute pression.

Selon un autre aspect, l'objet peut être soumis à l'exercice d'un cycle de haute pression et/ou haute température tel qu'il est pratiqué dans les laboratoires de recherche de minéralogie à haute pression par l'utilisation d'autoclave, de presse hydraulique, de presse multi-enclume, de cellule à enclume de diamant pour l'exercice de la pression et four radiatif, chauffage par radiation laser, chauffage par effet joule pour l'exercice de la température.

Dans le cadre général de l'invention, l'objet solide obtenu par le procédé de l'invention peut être renforcé par une armature constituée de treillis métalliques ou de fibres synthétiques (optique, carbone), ou textiles ou végétales, incorporée au coeur de la pâte tant qu'elle est liquide. D'autre part un marqueur spécifique (magnétique, électronique, radio-actif ...) peut être incorporé à l'objet par ajout à la pâte liquide.

Egalement des substances odorantes (organiques ou autres) peuvent être incluses à la pâte afin d'apporter une qualité olfactive à l'objet minéral solide obtenu par le procédé de l'invention.

De plus, on a montré selon l'invention qu'avec certains mélanges de composés à l'étape a) du procédé, on observe une migration de certains ions, notamment les alcalins, inclus dans la pâte minérale aqueuse, qui permet, lors de la réalisation de l'étape e) de cuisson, de réaliser une vitrification du matériau minéral final en surface qui s'apparente à un émail. Cet aspect du procédé de l'invention peut être avantageusement utilisé pour la fabrication de matériaux minéraux solides de type carrelage, bijoux, objets décoratifs, sanitaires etc.

De manière générale, on peut utiliser le procédé de l'invention pour la fabrication de matériaux minéraux solides qui peuvent ensuite être utilisés pour des applications similaires aux applications connues des argiles, des céramiques, des faïences, des verres, des émaux, des plastiques, des colles, des ciments et enduits, des pierres et des roches. Toutefois il est également possible de concevoir un objet minéral solide par le procédé de la présente invention tout en réduisant l'objet ainsi obtenu en poudre afin d'être employé tel que, par exemple en tant que colorant ou engrais agricole minéral.

L'invention est également relative à un matériau minéral solide obtenu par le procédé tel que défini ci-dessus, caractérisé en ce qu'il possède la composition chimique générale suivante, telle que déterminée par analyse par microscopie électronique à balayage (MEB-SEM) :

**Tableau 1**

| **Elément** | Si | Al | Ca | Mg | Na | K | S | Zn | Fe | O |
|---|---|---|---|---|---|---|---|---|---|---|
| **Atome%** | 17,2 | 12,7 | 2,0 | 0,3 | 0,4 | 2,1 | 1,9 | 0,2 | 0,2 | 63,0 |

L'invention concerne aussi un matériau minéral solide obtenu par le procédé tel que défini ci-dessus, caractérisé en ce qu'il possède la composition chimique générale suivante, telle que déterminée par analyse par microscopie électronique à balayage (MEB-SEM) :

**Tableau 2**

| **Elément** | Si | Al | Ca | Mg | Na | K | S | Zn | Fe | O |
|---|---|---|---|---|---|---|---|---|---|---|
| **Atome%** | 19,6 | 6,5 | 2,0 | 0,7 | 4,4 | 4,2 | 1,3 | 0,5 | 0,8 | 60,0 |

Comme cela a déjà été mentionné précédemment dans la présente description, dans certains modes de réalisation du procédé pour fabriquer un matériau minéral solide selon l'invention, on procède d'abord à un mélange des compositions a) et b), fournies respectivement aux étapes a1) et a2) du procédé, afin d'obtenir une composition de base qui peut être utilisée dans la suite du procédé. Dans un second temps, on procède au mélange de la composition de base ci-dessus avec la composition c) fournie à l'étape a3) du procédé, afin d'obtenir la pâte minérale aqueuse qui est utilisée pour réaliser les étapes suivantes du procédé.

Ainsi, pour la mise en oeuvre pratique du procédé pour fabriquer un matériau minéral solide selon l'invention, l'homme du métier peut préparer à l'avance une composition de base, constituée d'un mélange des compositions fournies aux étapes a1) et a2) dudit procédé, ladite composition de base pouvant être conservée pendant une longue période de temps avant son utilisation.

Dans ce mode de réalisation particulier du procédé de l'invention, l'étape a) est alors réalisée de manière complète en mélangeant la composition de base définie ci-dessus avec la composition fournie à l'étape a3). Puis les étapes suivantes du procédé sont réalisées, comme indiqué précédemment.

La composition de base, résultant du mélange des compositions a) et b), peut être conservée pendant plusieurs mois à température ambiante. Le cas échéant, après un temps de conservation de plusieurs mois, la composition de base peut être réhydratée par ajout d'eau avant son emploi.

La présente invention a également pour objet une composition de base pour la fabrication d'un matériau minéral solide selon la revendication 30.

La présente invention a également pour objet un procédé pour la préparation d'une composition de base pour la fabrication d'un matériau minéral solide selon la revendication 31.

La présente invention est en outre illustrée par les exemples suivants.

### EXEMPLES

Dans les exemples suivants, les réactifs sont utilisés avec une granulométrie fine obtenue par exemple par un broyage manuel ou mécanique. Certains réactifs peuvent néanmoins présenter une granulométrie millimétrique (schistes ardoisiers, arènes granitiques, lave...).

### Exemple 1 - exemple comparatif

- On réalise le mélange de :
   - 100 g de galze
   - 35 g de soude caustique NaOH
   - 35 g d'eau H₂O
   afin d'obtenir une pâte visqueuse consistant en de la silice dissoute en milieu alcalin.
- On réalise par ailleurs le mélange de :
   - 1,2 g de gypse CaSO₄ . 2H₂O
   - 0,3 g de soude caustique NaOH
   - 0, 5 g d'eau H₂O
Auquel on ajoute 4,2 g du premier mélange.
- On ajoute enfin :
   - 2,8 g de gibbsite Al(OH)₃
   - 3,2 g de cristobalite SiO₂
   - 1,5 g d'eau H₂O

Le mélange de ces sels et minéraux contient du silicium, de l'aluminium et du calcium. Il est disposé dans un moule ouvert (en contact avec l'air) puis maintenu à 30°C pendant 48h avant d'être démoulé.

### Exemple 2 - exemple comparatif

On réalise le mélange de :
- 100 g de gaize
- 50 g de potasse caustique KOH
- 35 g d'eau H₂O
afin d'obtenir une pâte visqueuse consistant en de la silice dissoute en milieu alcalin.
- On réalise par ailleurs le mélange de :
   - 2,4 g de gypse CaSO₄ . 2H₂O
   - 0,9 g de potasse caustique KOH
   - 0, 8 g d'eau H₂O

Auquel on ajoute 4,6 g du premier mélange.
- On ajoute enfin :
   - 6 g de métakaolin 2SiO₂ Al₂O₃
   - 0,2 g d'oxyde de zinc ZnO
   - 1,3 g d'eau H₂O

Le mélange de ces sels et minéraux contient du silicium, de l'aluminium et du calcium. Il est disposé dans un moule ouvert (en contact avec l'air) puis maintenu à 30°C pendant 48h avant d'être démoulé. L'analyse chimique par microscopie électronique à balayage (MEB-SEM) du liant obtenu est globalement celui représenté dans le Tableau 1 ci-dessous.

**Tableau 1**

| **Elément** | Si | Al | Ca | Mg | Na | K | S | Zn | Fe | O |
|---|---|---|---|---|---|---|---|---|---|---|
| **Atome%** | 17,2 | 12,7 | 2,0 | 0,4 | 0,4 | 2,1 | 1,9 | 0,2 | 0,2 | 63,0 |

### Exemple 3 - exemple comparatif

- On réalise le mélange de :
   - 25 g de diatomite
   - 25 g de potasse caustique KOH
   - 25 g de glauconie
   - 20 g d'eau H₂O
   afin d'obtenir une pâte visqueuse consistant en de la silice dissoute en milieu alcalin.
- On réalise par ailleurs le mélange de :
   - 1,1 g de gypse CaSO₄ . 2H₂O
   - 0,4 g de potasse caustique KOH
   - 0,6 g d'eau H₂O

Auquel on ajoute 4,5 g du premier mélange.
- On ajoute enfin :
   - 3 g de feldspath sodique NaSi₃AlO₈
   - 3 g de feldspath potassique KSi₃AlO₈
   - 1,7 g d'eau H₂O

Le mélange de ces sels et minéraux contient du silicium, de l'aluminium et du calcium. Il est disposé dans un moule ouvert (en contact avec l'air) puis maintenu à 35°C pendant 48h avant d'être démoulé.

### Exemple 4 - exemple comparatif

- On réalise le mélange de :
   - 100 g de gaize
   - 50 g de potasse caustique KOH
   - 35 g d'eau H₂O
   afin d'obtenir une pâte visqueuse consistant en de la silice dissoute en milieu alcalin.
- On prend 4,6 g de ce mélange auquel on ajoute :
   - 0,9 g de gypse CaSO₄ . 2H₂O
   - 0,3 g de fluoro-apatite Ca₅(PO₄)₃(OH,F,Cl)
   - 6 g de métakaolin 2SiO₂ Al₂O₃
   - 1 g de dolomie (Ca,Mg)CO₃
   - 0,3 g d'acide acétique
   - 0,2 g d'oxyde de zinc ZnO
   - 2 g d'eau H₂O

Le mélange de ces sels et minéraux contient du silicium, de l'aluminium, du calcium et du magnésium. Il est disposé dans un moule ouvert (en contact avec l'air) puis maintenu à 35°C pendant 48h avant d'être démoulé.

### Exemple 5 - exemple comparatif

- On réalise le mélange de :
   - 50 g de gypse CaSO₄ . 2H₂O
   - 50 g de potasse caustique KOH
   - 50 g d'eau H₂O
- On prend 2,0 g de ce mélange auquel on ajoute :
   - 6 g d'un silicate alcalin liquide industriel (0,23 Na₂O - 0,77 SiO₂, nH₂O)
   - 6 g de métakaolin 2SiO₂ Al₂O₃
   - 2 g d'eau H₂O

Le mélange de ces sels et minéraux contient du silicium, de l'aluminium et du calcium. Il est disposé dans un moule ouvert (en contact avec l'air) puis maintenu à 30°C pendant 48h, avant d'être démoulé.

### Exemple 6 - exemple comparatif

- On réalise le mélange de :
   - 100 g de gaize
   - 50 g de potasse caustique KOH
   - 35 g d'eau H₂O
   afin d'obtenir une pâte visqueuse consistant en de la silice dissoute en milieu alcalin.
- On réalise par ailleurs le mélange de :
   - 1,2 g de gypse CaSO₄ . 2H₂O
   - 0,4 g de soude caustique NaOH
   - 0,5 g d'eau H₂O

Auquel on ajoute 4,6 g du premier mélange.
- On ajoute enfin :
   - 6 g de lave trachy-andesite
   - 0,2 g d'oxyde de zinc ZnO
   - 2 g d'eau H₂O

Le mélange de ces sels et minéraux contient du silicium, de l'aluminium et du calcium. Il est disposé dans un moule ouvert (en contact avec l'air) puis maintenu à 35°C pendant 48h avant d'être démoulé.

L'analyse chimique par microscopie électronique à balayage (MEB-SEM) du liant obtenu après durcissement du mélange est globalement celui représenté dans le Tableau 2 ci-dessous.

**Tableau 2**

| **Elément** | Si | Al | Ca | Mg | Na | K | S | Zn | Fe | O |
|---|---|---|---|---|---|---|---|---|---|---|
| **Atome%** | 19,6 | 6.5. | 2,0 | 0,7 | 4,4 | 4,2 | 1,3 | 0,5 | 0,8 | 60,0 |

### Exemple 7 - exemple comparatif

On réalise le mélange de :
- 100 g de gaize
- 50 g de potasse caustique KOH
- 35 g de soude caustique NaOH
- 55 g d'eau H₂O
afin d'obtenir une pâte visqueuse consistant en de la silice dissoute en milieu alcalin.
- On réalise par ailleurs le mélange de :
   - 1,5 g d'acide sulfurique H₂SO₄ (dilué à 32%)
   - 0,5 g de fluoro-apatite Ca₅(PO₄)₃(OH,F,Cl)
   - 6,0 g de lave trachy-andesite
   - 1,0 g de dolomie (Ca,Mg)CO₃
   - 0,2 g d'oxyde de zinc ZnO
   - 1,0 g d'eau H₂O
Auquel on ajoute 6,0 g du premier mélange.

Le mélange de ces sels et minéraux contient du silicium, de l'aluminium et du calcium et du magnésium. Il est disposé dans un moule ouvert (en contact avec l'air) puis maintenu à 35°C pendant 96h avant d'être démoulé.

L'objet subit ensuite un traitement thermique à 815°C dans un four dont les évents d'aération ont été laissés ouverts.

### Exemple 8 - exemple selon l'invention

- On réalise le mélange de :
   - 100 g de gaize
   - 35 g de soude caustique NaOH
   - 35 g d'eau H₂O
   afin d'obtenir une pâte visqueuse consistant en de la silice dissoute en milieu alcalin.
- On prend 4,6 g de ce mélange auquel on ajoute :
   - 1,0 g de gypse CaSO₄ . 2H₂O
   - 0,5 g de bitartrate de potassium C₄H₅O₆K
   - 0,2 g de salpêtre KNO₃
   - 0,2 g de sel NaCl
   - 6 g de kaolin 2SiO₂ Al₂O₃ 2H₂O
   - 20 g de calcaire CaCO₃
   - 5 g d'eau H₂O

Le mélange de ces sels et minéraux contient du silicium, de l'aluminium et du calcium. Il est disposé dans un moule fermé (sans contact avec l'air) puis maintenu à 35°C pendant 48h avant d'être démoulé.

### Exemple 9 - exemple comparatif

- On réalise le mélange de :
   - 100 g de gaize
   - 25 g de potasse caustique KOH
   - 17 g de soude caustique NaOH
   - 35 g d'eau H₂O
   afin d'obtenir une pâte visqueuse consistant en de la silice dissoute en milieu alcalin.
- On réalise par ailleurs le mélange de :
   - 1,2 g de gypse CaSO₄ . 2H₂O
   - 0,4 g de potasse caustique KOH
   - 0, 5 g d'eau H₂O
Auquel on ajoute 4,4 g du premier mélange.
- On ajoute enfin :
   - 2 g de syenite nepheline 2SiO₂ Al₂O₃(NaK)O
   - 2 g de schiste ardoisier
   - 6 g d'arène granitique
   - 2 g de sable SiO₂
   - 2,6 g d'eau H₂O

Le mélange de ces sels et minéraux contient du silicium, de l'aluminium et du calcium et du magnésium. Il est disposé dans un moule fermé (sans contact avec l'air) puis maintenu à 40°C pendant 96h avant d'être démoulé. L'objet subit ensuite un traitement thermique à 905°C dont les vents d'aération ont été laissés ouverts.

### Exemple 10 - exemple selon l'invention

- On réalise le mélange de :
   - 100 g de diatomite
   - 50 g de soude caustique NaOH
   - 35 g d'eau H₂O
   afin d'obtenir une pâte visqueuse consistant en de la silice dissoute en milieu alcalin.
- On prend 0,6 g de ce mélange auquel on ajoute :
   - 0,4 g de bitartatre de potassium C₄H₅O₈K
   - 0,6 g de carbonate de sodium Na₂CO₃
   - 0,7 g de syenite nepheline 2SiO₂ Al₂O₃(NaK)O
   - 0,8 g de wollastonite CaSiO₃
   - 0,2 g de carbonate de cuivre CuCO₃
   - 15 g de sable SiO₂
   - 3,5 g d'eau H₂O

Le mélange de ces sels et minéraux contient du silicium, de l'aluminium et du calcium. Il est disposé dans un moule ouvert (en contact avec l'air) puis maintenu à 30°C pendant 72h avant d'être démoulé.

L'objet subit ensuite un traitement thermique à 835°C dont les vents d'aération ont été laissés ouverts, Il en ressort couvert d'un émail de couleur bleue turquoise.

Des oxydes ou minéraux riches en Mn, Cr, Fe... peuvent être utilisés en complément ou remplacement de la chrysocolle afin de modifier la couleur de l'émail obtenu.

### Exemple 11 - exemple selon l'invention

- On réalise le mélange de ::
   - 100 g de gaize
   - 50 g de potasse caustique KOH
   - 35 g d'eau H₂O
   afin d'obtenir une pâte visqueuse consistant en de la silice dissoute en milieu alcalin.
- Par ailleurs on prépare un second mélange constitué de :
   - 0,3 g d'or Au (18 carats)
   - 0,8 g d'acide nitrique HNO₃ (concentré à 22%)
   - 1 g d'acide chlorhydrique HCl (concentré à 30%)
   - 0,7 g d'eau H₂O
   qui permet la dissolution de l'or (dissolution à l'eau régale) et l'obtention de ses sels sous forme liquide.
On prend 0,6 g du premier mélange auquel on ajoute :
- 0,5 g de bitartrate de potassium C₄H₅O₆K
- 1,1 g de natron Na₂CO₃
- 0,6 g de syenite nepheline 2SiO₂ Al₂O₃(NaK)O
- 3 g de wollastonite CaSiO₃
- 5 g de sable SiO₂
- 1 g d'eau H₂O
On ajoute enfin les sels d'or dissous dans l'eau régale.

Le mélange de ces sels et minéraux contient du silicium, de l'aluminium et du calcium. Il est disposé dans un moule ouvert (en contact avec l'air) puis maintenu à 30°C pendant 48h avant d'être démoulé.

L'objet subit ensuite un traitement thermique à 865°C dont les vents d'aération ont été laissés fermés, il en ressort en présentant une surface partiellement recouverte d'or.

## Revendications

1. Procédé pour fabriquer un matériau minéral solide comprenant les étapes suivantes :
a) on réalise une pâte aqueuse selon les étapes suivantes :
a1) on fournit une composition de pâte obtenue par réaction de (i) une poudre d'un ou plusieurs matériaux comprenant un composé ou une combinaison de composés de silicium choisis parmi :
- les composés de silicium présents sous forme de silice anhydre (SiO₂) choisis parmi un silicate amorphe, le quartz, la trymidite, la cristoballite, la coesite et la silice anhydre extraite à partir d'une plante; et
- les composés de silicium présents sous forme de silice hydratée (Si(OH)₄) choisis parmi la diatomite, la radiolarite, l'opale, la gaize, le silex, la meulière, le jaspe, l'agate, le « chert », la lutécite, la calcédonite, la quartzine, le bois fossile, la calcédoine et les matériaux comprenant de l'opale ou de la calcédoine,
avec (ii) une base minérale ou une combinaison de bases minérales, éventuellement avec (iii) ajout d'eau ;
a2) on fournit une composition constituée d'un composé ou d'une combinaison de composés choisis parmi les sels d'acides organiques;
a3) on fournit une composition comprenant un minéral ou une combinaison de minéraux cristallins ou amorphes additionnels choisis parmi :
- les aluminosilicates,
- les aluminates ;
- les carbonates alcalins ou alcalino-terreux;
- les carbonates métalliques ;
- les silicates constitués de silice pure ; et
- les silicates alcalino-terreux
de telle manière que les compositions fournies aux étapes a1) à a3) comprennent au moins (i) du silicium, sous forme de silice anhydre, ou (ii) de l'aluminium et (iii) du calcium et/ou du magnésium, ladite composition comprenant éventuellement de l'eau ;
a4) on réalise une pâte par mélange des compositions fournies aux étapes a1), a2) et a3).
b) on met en forme la pâte obtenue à l'étape a) ; et
c) on réalise le durcissement de la pâte aqueuse mise en forme à l'étape b) par séchage à pression atmosphérique, et à une température inférieure à 99°C, jusqu'à obtenir le matériau minéral solide.

2. Procédé selon la revendication 1, **caractérisé en ce que** l'étape c) de durcissement est suivie d'une étape de cuisson.

3. Procédé selon la revendication 2, **caractérisé en ce que** l'étape de cuisson est réalisée à une température inférieure à 1500°C.

4. Procédé selon la revendication 1, **caractérisé en ce que** le quartz est choisi parmi le cristal de roche, l'améthyste, le quartz rose, le quartz enfumé, le quartz cirin, le quartz laiteux, le prasiolite, l'aventurine, et le quartz fibreux.

5. Procédé selon la revendication 1, **caractérisé en ce que** le ou les matériaux comprenant un composé ou une combinaison de composés de silicium du type silice anhydre (SiO₂) sont choisis parmi un silicate amorphe comprenant plus de 20% en moles de SiO₂, par rapport au nombre total de moles dudit silicate.

6. Procédé selon la revendication 1, **caractérisé en ce que** les aluminosilicates sont choisis parmi (i) les argiles naturelles et les argiles cuites, (ii) les feldspaths, (iii) les micas, (iv) les verres volcaniques, (v) les schistes, (vi) les zéolithes, (vii) les grenats , (viii) certaines amphiboles et (ix) les feldspathoïdes ;

7. Procédé selon la revendication 6, **caractérisé en ce que** les argiles sont choisies parmi la kaolinite Al₂Si₂O₅(OH)₄, l'illite Kal₄ [Si₇AlO₂₀] (OH)₄, la smectite (1/2 Ca, Na)_{0,7} (Al₄[(Si, Al)₈ O₂₀] (OH)₄.nH₂O, la vermiculite (Mg, Ca)_{0,6} Al₆ [(SiAl)₈O₂₀](OH)₄.nH₂O, le métakaolin 2SiO₂ Al₂O₃ et la terre cuite.

8. Procédé selon la revendication 6, **caractérisé en ce que** les feldspaths sont choisis parmi les feldspaths orthoclases KAlSi₃O₈ y compris l'orthose, microcline et sanidine, les feldspaths plagioclases y compris l'albite NaAlSi₃O₈ et l'anorthite CaAl₂Si₂O₈.

9. Procédé selon la revendication 6, **caractérisé en ce que** les feldspathoïdes sont choisis parmi la néphéline (Na₃,K)AlSiO₄, la kalsilite SiAlO₄K, la cancrinite ou la vishnevite (Na,Ca,K)₆₋₈[Si₆Al₆O₂₄][(SO₄,CO₃,Cl,OH]₁₋₂.nH₂O, la leucite KAlSi₂O₆, l'analcite NaAlSi₂O₆.H₂O, la sodalite Na₈Si₆Al₆O₂₄Cl₂, l'haüyne (Na,Ca)₄₈[Si₆Al₆O₂₄](SO₄)₁₋₂, la lazurite (Na,Ca)₄₋₈[Si₆Al₆O₂₄](SO₄,S) et la noséane Na₈[Si₆Al₆O₂₄](SO₄).

10. Procédé selon la revendication 6, **caractérisé en ce que** les micas sont choisis parmi la biotite K(Fe,Mg)₃AlSi₃O₁₀(OH,F)₂, la muscovite KAl₂(AlSi₃O₁₀)(OH,F)₂, la bromomuscovite KAl₂BSi₃O₁₀(OH,F)₂, l'hydrobiotite K(Mg,Fe)₉(Si,Al)₈O₂₀(OH)₄.nH₂O, la phlogopite KMg₃(AlSi₃O₁₀) (F,OH)₂, la lepidolite KLi₂Al(OH,F)₂AlSi₃O₁₀, la zinnwaldite KLiFeAl(OH,F)₂, la glauconite (K, Ca, Na)_{1,6} (Fe, Al, Mg)₄ Si_{7,3} Al_{0,7} O₂₀ (OH)₄ et la paragonite Na₂Al₄ [Si₆Al₂O₂₀](OH)₄.

11. Procédé selon la revendication 6, **caractérisé en ce que** les grenats sont choisis parmi l'almandin Fe₃Al2(SiO₄)₃, le grossulaire Ca₃Al₂(SiO₄)₃, la pyrope Mg₃Al₂(SiO₄)₃, et la spessartite Mn₃Al₂(SiO₄)₃.

12. Procédé selon la revendication 1, **caractérisé en ce qu'**à l'étape a1) et/ou à l'étape a3), la silice est une silice anhydre qui est extraite à partir d'une plante.

13. Procédé selon la revendication 12, **caractérisé en ce que** ladite plante est choisie parmi la prêle (*Equisetum arwense*), la fougère, la paille de riz, le roseau, le papyrus ou une plante céréalière.

14. Procédé selon l'une des revendications 1 à 13, **caractérisé en ce qu'**à l'étape a1), la base minérale est choisie parmi un hydroxyde de sodium, un hydroxyde de potassium, un hydroxyde de lithium, du carbonate de sodium (Na₂CO₃ ou Na₂CO₃.10H₂O), du carbonate de potassium K₂CO₃ et du carbonate de lithium Li₂CO₃.

15. Procédé selon l'une des revendications 1 à 14, **caractérisé en ce qu'**à l'étape a2) on ajoute un ou plusieurs composés minéraux choisis parmi les composés comprenant des radicaux phosphate [PO₄³⁻], nitrate [NO₃⁻], fluorure [F⁻] et chlorure [Cl⁻].

16. Procédé selon la revendication 15, **caractérisé en ce que** les composés minéraux additionnels sont choisis parmi l'apatite Ca₅ (PO₄)₃ (OH, F,Cl)], le salpêtre KNO₃, le spath fluor CaF₂ et le sel commun NaCl.

17. Procédé selon la revendication 1, **caractérisé en ce qu'**à l'étape a2), on ajoute un sel de l'acide sulfurique.

18. Procédé selon la revendication 17, **caractérisé en ce que** le sel d'acide sulfurique consiste en du gypse [CaSO₄.2H₂O].

19. Procédé selon la revendication 1, **caractérisé en ce qu'**à l'étape a2), pour le sel d'acide organique, ledit sel d'acide organique consiste en un sel d'un acide carboxylique choisi parmi les acides alkylcarboxyliques de 2 à 20 atomes de carbone et les acides arylcarboxyliques de 6 à 20 atomes de carbones.

20. Procédé selon la revendication 19, **caractérisé en ce que** les sels d'acides alkylcarboxyliques et arylcarboxyliques sont choisis parmi les sels des acides suivants : acide acétique [CH₃COOH], acide benzoïque [C₆H₅COOH], acide butanoïque [CH₃CH₂CH₂COOH], acide chloroacétique [ClCH₂COOH], acide citrique [HOOCC(OH)(CH₂COOH)₂], acide formique [HCOOH], acide fumarique [trans-HOOCCH-CHCOOH], acide glycolique [HOCH₂COOH], acide lactique [CH₃CH(OH)COOH], acide maléique [cis-HOOCCH-CHCOOH], acide malique [HOOCCH(OH)CH₂COOH], acide malonique [HOOCCH₂COOH], acide mandélique [C₆H₅CH5OH)COOH], acide o-phtalique [o-C₆H₄(COOH)₂], acide oxalique [HOOCCOOH], acide propanoïque [CH₃CH₂COOH], acide pyruvique [CH₃COCOOH], acide salicylique [o-C₆H₄(OH)COOH], acide succinique [HOOCCH₂CH₂COOH], acide tartrique [HOOCCH(OH)CH(OH)COOH], acide trichloroacétique [CCl₃CCOOH].

21. Procédé selon la revendication 20, **caractérisé en ce que** le sel d'acide organique consiste en du bitartrate de potassium C₄H₅O₆K.

22. Procédé selon la revendication 1, **caractérisé en ce qu'**à l'étape a3) le ou les aluminates sont choisis parmi la gibbsite, l'alumine et le diaspore.

23. Procédé selon la revendication 1, **caractérisé en ce qu'**à l'étape a3) le ou les carbonates alcalins ou alcalino-terreux sont choisis parmi la calcite, la dolomite, la magnésite et le natron.

24. Procédé selon la revendication 1, **caractérisé en ce qu'**à l'étape a3) le ou les carbonates métalliques sont choisis parmi la malachite et la rhodocrosite.

25. Procédé selon la revendication 1, **caractérisé en ce qu'**à l'étape a3) le ou les silicates constitués de silice pure sont choisis parmi le quartz, la cristoballite, la trymidite, la coésite et la silice amorphe.

26. Procédé selon la revendication 1, **caractérisé en ce qu'**à l'étape a3) le ou les silicates alcalino-terreux sont choisis parmi le talc, la serpentine, l'amiante, la wollastonite, les pyroxènes, l'olivine et certaines amphiboles.

27. Procédé selon la revendication 26, **caractérisé en ce que** les pyroxènes sont choisis parmi un orthopyroxène y compris l'enstatite MgSiO₃, l'aegyrine NaFeSi₂O₆, la pigeonite (Mg, Fe, Ca) (Mg, Fe)Si₂O₆ et le ferrosilite FeSiO₃, un clinopyroxène y compris le diopside CaMgSi₂O₆, l'augite (Ca,Fe,Mg)(Si,Al)₂O₆, la jadéite NaAlSi₂O₆ et un spodumène LiAlSi₆O₆.

28. Procédé selon l'une des revendications 1 à 27, **caractérisé en ce qu'**à l'étape a), on ajoute de l'oxyde zinc [ZnO].

29. Pâte minérale aqueuse pour réaliser un matériau minéral solide **caractérisée en ce qu'**elle est constituée d'un mélange comprenant :
a) une composition de pâte obtenue par réaction de :
(i) une poudre d'un ou plusieurs matériaux comprenant un composé ou une combinaison de composés de silicium choisis parmi :
- les composés de silicium présents sous forme de silice anhydre (SiO₂) choisis parmi le quartz, la trymidite, la cristoballite, la coesite et la silice anhydre extraite à partir d'une plante; et
- les composés de silicium présents sous forme de silice hydratée (Si(OH)₄) choisis parmi la diatomite, la radiolarite, l'opale, la gaize, le silex, la meulière, le jaspe, l'agate, le « chert », la lutécite, la calcédonite, la quartzine, le bois fossile, la calcédoine et les matériaux comprenant de l'opale ou de la calcédoine,
avec (ii) une base minérale ou une combinaison de bases minérales, éventuellement avec (iii) ajout d'eau ;
b) une composition constituée d'un composé ou d'une combinaison de composés choisis parmi les sels d'acides organiques ;
c) une composition comprenant un minéral ou une combinaison de minéraux cristallins ou amorphes additionnels choisis parmi
- les aluminosilicates,
- les aluminates ;
- les carbonates alcalins ou alcalino-terreux;
- les carbonates métalliques ;
- les silicates constitués de silice pure ; et
- les silicates alcalino-terreux
de telle manière que les compositions fournies aux étapes a1) à a3) comprennent au moins (i) du silicium, sous forme de silice anhydre, ou (ii) de l'aluminium et (iii) du calcium et/ou du magnésium, ladite composition comprenant éventuellement de l'eau ;

30. Composition de base pour la fabrication d'un matériau minéral solide, constituée d'un mélange des compositions a) et b) suivantes:
a) une composition de pâte obtenue par réaction de (i) une poudre d'un ou plusieurs matériaux comprenant un composé ou une combinaison de composés de silicium choisis parmi :
- les composés de silicium présents sous forme de silice anhydre (SiO₂) choisis parmi un silicate amorphe, le quartz, la trymidite, la cristoballite, la coesite.et la silice anhydre extraite à partir d'une plante; et
- les composés de silicium présents sous forme de silice hydratée (Si(OH)₄) choisis parmi la diatomite, la radiolarite, l'opale, la gaize, le silex, la meulière, le jaspe, l'agate, le « chert », la lutécite, la calcédonite, la quartzine, le bois fossile, la calcédoine et les matériaux comprenant de l'opale ou de la calcédoine,
avec (ii) une base minérale ou une combinaison de bases minérales, éventuellement avec (iii) ajout d'eau ;
b) une composition constituée d'un composé ou d'une combinaison de composés choisis parmi les sels d'acides organiques ;

31. Procédé pour la préparation d'une composition de base pour la fabrication d'un matériau minéral solide, ledit procédé comprenant les étapes suivantes :
a) on fournit une composition de pâte obtenue par réaction de (i) une poudre d'un ou plusieurs matériaux comprenant un composé ou une combinaison de composés de silicium choisis parmi :
- les composés de silicium présents sous forme de silice anhydre (SiO₂) choisis parmi un silicate amorphe, le quartz, la trymidite, la cristoballite, la coesite et la silice anhydre extraite à partir d'une plante; et
- les composés de silicium présents sous forme de silice hydratée (Si(OH)₄) choisis parmi la diatomite, la radiolarite, l'opale, la gaize, le silex, la meulière, le jaspe, l'agate, le « chert », la lutécite, la calcédonite, la quartzine, le bois fossile, la calcédoine et les matériaux comprenant de l'opale ou de la calcédoine,
avec (ii) une base minérale ou une combinaison de bases minérales, éventuellement avec (iii) ajout d'eau ;
b) on fournit une composition constituée d'un composé ou d'une combinaison de composés choisis parmi les sels d'acides organiques ;
c) on réalise ladite composition de base par mélange de la composition fournie à l'étape a) avec la composition fournie à l'étape b).

## Patentansprüche

1. Verfahren zur Herstellung eines festen mineralischen Materials, umfassend die folgenden Schritte:
a) Herstellen einer wässrigen Paste gemäß den folgenden Schritten:
a1) Bereitstellen einer Pastenzusammensetzung, die erhalten wird durch Reaktion von (i) einem Pulver von einem oder mehreren Materialien, die eine Siliciumverbindung oder eine Kombination von Siliciumverbindungen umfassen, welche ausgewählt sind aus:
- Siliciumverbindungen, die in Form von wasserfreier Kieselsäure (SiO₂) vorliegen, welche aus einem amorphen Silicat, Quarz, Tridymit, Cristobalit, Coesit und wasserfreier Kieselsäure, die aus einer Pflanze gewonnen wurde, ausgewählt ist; und
- Siliciumverbindungen, die in Form von hydratisierter Kieselsäure (Si(OH)₄) vorliegen, welche aus Kieselgur, Radiolarit, Opal, Pläner, Feuerstein, Süßwasserquarz, Jaspis, Achat, Chert, Mogánit, kryptokristallinem Quarz, Quarzin, Dendrolith, Chalcedon und Materialien, die Opal oder Chalcedon umfassen, ausgewählt ist;
mit (ii) einer mineralischen Base oder einer Kombination von mineralischen Basen, gegebenenfalls unter (iii) Zusatz von Wasser;
a2) Bereitstellen einer Zusammensetzung, die aus einer Verbindung oder Kombination von Verbindungen besteht, die aus Salzen organischer Säuren ausgewählt sind;
a3) Bereitstellen einer Zusammensetzung, die ein zusätzliches kristallines oder amorphes Mineral oder eine Kombination solcher Mineralien umfasst, welche ausgewählt sind aus:
- Aluminosilicaten;
- Aluminaten;
- Alkali- oder Erdalkalimetallcarbonaten;
- Metallcarbonaten;
- Silicaten, die aus reiner Kieselerde bestehen; und
- Erdalkalisilicaten;
und zwar so, dass die in den Schritten a1) bis a3) bereitgestellten Zusammensetzungen wenigstens (i) Silicium in Form von wasserfreier Kieselsäure oder (ii) Aluminium und (iii) Calcium und/oder Magnesium umfassen, wobei die Zusammensetzung gegebenenfalls Wasser umfasst;
a4) Herstellen einer Paste durch Mischen der in den Schritten a1), a2) und a3) bereitgestellten Zusammensetzungen;
b) In-Form-Bringen der in Schritt a) erhaltenen Paste; und
c) Härten der in Schritt b) in Form gebrachten wässrigen Paste durch Trocknen unter Atmosphärendruck und bei einer Temperatur von unter 99 °C, bis ein festes mineralisches Material erhalten wird.

2. Verfahren gemäß Anspruch 1, **dadurch gekennzeichnet, dass** auf den Härtungsschritt c) ein Brennschritt folgt.

3. Verfahren gemäß Anspruch 2, **dadurch gekennzeichnet, dass** der Brennschritt bei einer Temperatur unter 1500 °C durchgeführt wird.

4. Verfahren gemäß Anspruch 1, **dadurch gekennzeichnet, dass** der Quarz aus Bergkristall, Amethyst, Rosenquarz, Rauchquarz, Citrin, Milchquarz, Prasiolith, Aventurin und faserigem Quarz ausgewählt ist.

5. Verfahren gemäß Anspruch 1, **dadurch gekennzeichnet, dass** das oder die Materialien, die eine Siliciumverbindung oder eine Kombination von Siliciumverbindungen des Typs wasserfreie Kieselsäure (SiO₂) umfassen, ausgewählt sind aus einem amorphen Silikat, das mehr als 20 Mol-% SiO₂ umfasst, bezogen auf die gesamte Stoffmenge des Silicats.

6. Verfahren gemäß Anspruch 1, **dadurch gekennzeichnet, dass** die Aluminosilicate ausgewählt sind aus (i) natürlichen Tonen und gebrannten Tonen, (ii) Feldspaten, (iii) Glimmern, (iv) vulkanischen Gläsern, (v) Schiefern, (vi) Zeolithen, (vii) Granaten, (viii) bestimmten Amphibolen und (ix) Foiden.

7. Verfahren gemäß Anspruch 6, **dadurch gekennzeichnet, dass** die Tone ausgewählt sind aus Kaolinit Al₂Si₂O₅(OH)₄, Illit KAl₄[Si₇AlO₂₀](OH)₄, Smektit (1/2 Ca,Na)_{0,7}Al₄[(Si,Al)₈O₂₀](OH)₄·nH₂O, Vermiculit (Mg,Ca)_{0,6}Al₆ [(SiAl)₈O₂₀](OH)₄·nH₂O, Metakaolin 2SiO₂Al₂O₃ und Terrakotta.

8. Verfahren gemäß Anspruch 6, **dadurch gekennzeichnet, dass** die Feldspate ausgewählt sind aus Orthoklas-Feldspaten KAlSi₃O₈ einschließlich Orthoklas, Mikroklin und Sanidin, Plagioklas-Feldspaten einschließlich Albit NaAlSi₃O₈ und Anorthit CaAl₂Si₂O₈.

9. Verfahren gemäß Anspruch 6, **dadurch gekennzeichnet, dass** die Foide ausgewählt sind aus Nephelin (Na₃,K)AlSiO₄, Kalsilit SiAl0₃₄K, Cancrinit oder Vishnevit (Na,Ca,K)₆₋₈[Si₆Al₆O₂₄][(SO₄,CO₃,Cl,OH]_{1-2·}nH₂O, Leucit KAlSi₂O₆, Analcit NaAlSi₂O₆·H₂O, Sodalith Na₈Si₆Al₆O₂₄Cl₂, Haüyn (Na,Ca)₄₋₈[Si₆Al₆O₂₄](SO₄)₁₋₂, Lazurit (Na,Ca)₄₋₈[Si₆Al₆O₂₄](SO₄,S) und Nosean Na₈[Si₆Al₆O₂₄](SO₄).

10. Verfahren gemäß Anspruch 6, **dadurch gekennzeichnet, dass** die Glimmer ausgewählt sind aus Biotit K(Fe,Mg)₃AlSi₃O₁₀(OH,F)₂, Muskovit KAl₂ (AlSi₃O₁₀)(OH,F)₂, Boromuskovit KAl₂BSi₃O₁₀(OH,F)₂, Hydrobiotit K(Mg,Fe)₉ (Si,Al)₈O₂₀(OH)₄·nH₂O, Phlogopit KMg₃(AlSi₃O₁₀)(F,OH)₂, Lepidolith KLi₂Al(OH,F)₂AlSi₃O₁₀, Zinnwaldit KLiFeAl(OH,F)₂, Glauconit (K,Ca,Na)_{1,6} (Fe,Al,Mg)₄Si_{7,3}Al_{0,7}O₂₀(OH)₄ und Paragonit Na₂Al₄[Si₆Al₂O₂₀](OH)₄.

11. Verfahren gemäß Anspruch 6, **dadurch gekennzeichnet, dass** die Granate ausgewählt sind aus Almandin Fe₃Al₂(SiO₄)₃, Grossular Ca₃Al₂(SiO₄)₃, Pyrop Mg₃Al₂(SiO₄)₃ und Spessartit Mn₃Al₂(SiO₄)₃.

12. Verfahren gemäß Anspruch 1, **dadurch gekennzeichnet, dass** die Kieselsäure in Schritt a1) und/oder in Schritt a3) eine wasserfreie Kieselsäure, die aus einer Pflanze gewonnen wurde, ist.

13. Verfahren gemäß Anspruch 12, **dadurch gekennzeichnet, dass** die Pflanze ausgewählt ist aus Acker-Schachtelhalm (*Equisetum arvense*), Farnkraut, Reisstroh, Schilfrohr, Papyrus oder einer Getreidepflanze.

14. Verfahren gemäß einem der Ansprüche 1 bis 13, **dadurch gekennzeichnet, dass** die mineralische Base in Schritt a1) ausgewählt ist aus Natriumhydroxid, Kaliumhydroxid, Lithiumhydroxid, Natriumcarbonat (Na₂CO₃ oder Na₂CO₃·10H₂O), Kaliumcarbonat K₂CO₃ und Lithiumcarbonat Li₂CO₃.

15. Verfahren gemäß einem der Ansprüche 1 bis 14, **dadurch gekennzeichnet, dass** man in Schritt a2) eine oder mehrere mineralische Verbindungen hinzufügt, die ausgewählt sind aus Verbindungen, die Phosphat- [PO₄³⁻], Nitrat- [NO₃⁻], Fluorid- [F⁻] und Chloridreste [Cl⁻] umfassen.

16. Verfahren gemäß Anspruch 15, **dadurch gekennzeichnet, dass** die zusätzlichen mineralischen Verbindungen ausgewählt sind aus Apatit Ca₅(PO₄)₃(OH,F,Cl), Salpeter KNO₃, Flussspat CaF₂ und Kochsalz NaCl.

17. Verfahren gemäß Anspruch 1, **dadurch gekennzeichnet, dass** man in Schritt a2) ein Salz der Schwefelsäure hinzufügt.

18. Verfahren gemäß Anspruch 17, **dadurch gekennzeichnet, dass** das Salz der Schwefelsäure aus Gips [CaSO₄·2H₂O] besteht.

19. Verfahren gemäß Anspruch 1, **dadurch gekennzeichnet, dass** das Salz einer organischen Säure in Schritt a2) aus einem Salz einer Carbonsäure besteht, die aus Alkylcarbonsäuren mit 2 bis 20 Kohlenstoffatomen und Arylcarbonsäuren mit 6 bis 20 Kohlenstoffatomen ausgewählt ist.

20. Verfahren gemäß Anspruch 19, **dadurch gekennzeichnet, dass** die Salze der Alkylcarbonsäuren und Arylcarbonsäuren ausgewählt sind aus Salzen der folgenden Säuren: Essigsäure [CH₃COOH], Benzoesäure [C₆H₅COOH], Buttersäure [CH₃CH₂CH₂COOH], Chloressigsäure [ClCH₂COOH], Zitronensäure [HOOCC(OH)(CH₂COOH)₂], Ameisensäure [HCOOH], Fumarsäure [trans-HOOCCH-CHCOOH], Glycolsäure [HOCH₂COOH], Milchsäure [CH₃CH(OH)COOH], Maleinsäure [cis-HOOCCH-CHCOOH], Äpfelsäure [HOOCCH(OH)CH₂COOH], Malonsäure [HOOCCH₂COOH], Mandelsäure [C₆H₅CH(OH)COOH], o-Phthalsäure [o-C₆H₄(COOH)₂], Oxalsäure [HOOCCOOH], Propionsäure [CH₃CH₂COOH], Brenztraubensäure [CH₃COCOOH], Salicylsäure [o-C₆H₄(OH)COOH], Bernsteinsäure [HOOCCH₂CH₂COOH], Weinsäure [HOOCCH(OH)CH(OH)COOH], Trichloressigsäure [CCl₃CCOOH].

21. Verfahren gemäß Anspruch 20, **dadurch gekennzeichnet, dass** das Salz der organischen Säure aus Kaliumhydrogentartrat C₄H₅O₆K besteht.

22. Verfahren gemäß Anspruch 1, **dadurch gekennzeichnet, dass** das oder die Aluminate in Schritt a3) aus Gibbsit, Tonerde und Diaspor ausgewählt sind.

23. Verfahren gemäß Anspruch 1, **dadurch gekennzeichnet, dass** das oder die Alkali- oder Erdalkalimetallcarbonate in Schritt a3) aus Calcit, Dolomit, Magnesit und Kristallsoda ausgewählt sind.

24. Verfahren gemäß Anspruch 1, **dadurch gekennzeichnet, dass** das oder die Metallcarbonate in Schritt a3) aus Malachit und Rhodocrosit ausgewählt sind.

25. Verfahren gemäß Anspruch 1, **dadurch gekennzeichnet, dass** das oder die aus reiner Kieselerde bestehenden Silicate in Schritt a3) aus Quarz, Cristobalit, Tridymit, Coesit und amorpher Kieselerde ausgewählt sind.

26. Verfahren gemäß Anspruch 1, **dadurch gekennzeichnet, dass** das oder die Erdalkalisilicate in Schritt a3) aus Talk, Serpentin, Asbest, Wollastonit, Pyroxenen, Olivin und bestimmten Amphibolen ausgewählt sind.

27. Verfahren gemäß Anspruch 26, **dadurch gekennzeichnet, dass** die Pyroxene ausgewählt sind aus einem Orthopyroxen einschließlich Enstatit MgSiO₃, Ägirin NaFeSi₂O₆, Pigeonit (Mg,Fe,Ca)(Mg,Fe)Si₂O₆ und Ferrosilit FeSiO₃, einem Klinopyroxen einschließlich Diopsid CaMgSi₂O₆, Augit (Ca,Fe,Mg)(Si,Al)₂O₆, Jadeit NaAlSi₂O₆ und Spodumen LiAlSi₆O₆.

28. Verfahren gemäß einem der Ansprüche 1 bis 27, **dadurch gekennzeichnet, dass** man in Schritt a) Zinkoxid [ZnO] hinzufügt.

29. Wässrige mineralische Paste zur Herstellung eines festen mineralischen Materials, **dadurch gekennzeichnet, dass** sie aus einem Gemisch besteht, umfassend:
a) einer Pastenzusammensetzung, die erhalten wird durch Reaktion von:
(i) einem Pulver von einem oder mehreren Materialien, die eine Siliciumverbindung oder eine Kombination von Siliciumverbindungen umfassen, welche ausgewählt sind aus:
- Siliciumverbindungen, die in Form von wasserfreier Kieselsäure (SiO₂) vorliegen, welche aus einem amorphen Silicat, Quarz, Tridymit, Cristobalit, Coesit und wasserfreier Kieselsäure, die aus einer Pflanze gewonnen wurde, ausgewählt ist; und
- Siliciumverbindungen, die in Form von hydratisierter Kieselsäure (Si(OH)₄) vorliegen, welche aus Kieselgur, Radiolarit, Opal, Pläner, Feuerstein, Süßwasserquarz, Jaspis, Achat, Chert, Mogánit, kryptokristallinem Quarz, Quarzin, Dendrolith, Chalcedon und Materialien, die Opal oder Chalcedon umfassen, ausgewählt ist;
mit (ii) einer mineralischen Base oder einer Kombination von mineralischen Basen, gegebenenfalls unter (iii) Zusatz von Wasser;
b) einer Zusammensetzung, die aus einer Verbindung oder Kombination von Verbindungen besteht, die aus Salzen organischer Säuren ausgewählt sind;
c) einer Zusammensetzung, die ein zusätzliches kristallines oder amorphes Mineral oder eine Kombination solcher Mineralien umfasst, welche ausgewählt sind aus:
- Aluminosilicaten;
- Aluminaten;
- Alkali- oder Erdalkalimetallcarbonaten;
- Metallcarbonaten;
- Silicaten, die aus reiner Kieselerde bestehen; und
- Erdalkalisilicaten;
und zwar so, dass die in den Schritten a1) bis a3) bereitgestellten Zusammensetzungen wenigstens (i) Silicium in Form von wasserfreier Kieselsäure oder (ii) Aluminium und (iii) Calcium und/oder Magnesium umfassen, wobei die Zusammensetzung gegebenenfalls Wasser umfasst.

30. Grundzusammensetzung zur Herstellung eines festen mineralischen Materials, die aus einem Gemisch der folgenden Zusammensetzungen a) und b) besteht:
a) einer Pastenzusammensetzung, die erhalten wird durch Reaktion von (i) einem Pulver von einem oder mehreren Materialien, die eine Siliciumverbindung oder eine Kombination von Siliciumverbindungen umfassen, welche ausgewählt sind aus:
- Siliciumverbindungen, die in Form von wasserfreier Kieselsäure (SiO₂) vorliegen, welche aus einem amorphen Silicat, Quarz, Tridymit, Cristobalit, Coesit und wasserfreier Kieselsäure, die aus einer Pflanze gewonnen wurde, ausgewählt ist; und
- Siliciumverbindungen, die in Form von hydratisierter Kieselsäure (Si(OH)₄) vorliegen, welche aus Kieselgur, Radiolarit, Opal, Pläner, Feuerstein, Süßwasserquarz, Jaspis, Achat, Chert, Mogánit, kryptokristallinem Quarz, Quarzin, Dendrolith, Chalcedon und Materialien, die Opal oder Chalcedon umfassen, ausgewählt ist;
mit (ii) einer mineralischen Base oder einer Kombination von mineralischen Basen, gegebenenfalls unter (iii) Zusatz von Wasser;
b) einer Zusammensetzung, die aus einer Verbindung oder Kombination von Verbindungen besteht, die aus Salzen organischer Säuren ausgewählt sind.

31. Verfahren zur Herstellung einer Grundzusammensetzung zur Herstellung eines festen mineralischen Materials, wobei das Verfahren die folgenden Schritte umfasst:
a) Bereitstellen einer Pastenzusammensetzung, die erhalten wird durch Reaktion von (i) einem Pulver von einem oder mehreren Materialien, die eine Siliciumverbindung oder eine Kombination von Siliciumverbindungen umfassen, welche ausgewählt sind aus:
- Siliciumverbindungen, die in Form von wasserfreier Kieselsäure (SiO₂) vorliegen, welche aus einem amorphen Silicat, Quarz, Tridymit, Cristobalit, Coesit und wasserfreier Kieselsäure, die aus einer Pflanze gewonnen wurde, ausgewählt ist; und
- Siliciumverbindungen, die in Form von hydratisierter Kieselsäure (Si(OH)₄) vorliegen, welche aus Kieselgur, Radiolarit, Opal, Pläner, Feuerstein, Süßwasserquarz, Jaspis, Achat, Chert, Mogánit, kryptokristallinem Quarz, Quarzin, Dendrolith, Chalcedon und Materialien, die Opal oder Chalcedon umfassen, ausgewählt ist;
mit (ii) einer mineralischen Base oder einer Kombination von mineralischen Basen, gegebenenfalls unter (iii) Zusatz von Wasser;
b) Bereitstellen einer Zusammensetzung, die aus einer Verbindung oder Kombination von Verbindungen besteht, die aus Salzen organischer Säuren ausgewählt sind;
c) Herstellen der Grundzusammensetzung durch Mischen der in Schritt a) bereitgestellten Zusammensetzung mit der in Schritt b) bereitgestellten Zusammensetzung.

## Claims

1. A method for producing a solid mineral material comprising the following steps:
a) an aqueous paste is produced according to the following steps:
a1) a paste formulation is provided obtained by reaction of (i) a powder of one or more materials comprising a compound or a combination of compounds of silicon selected from among:
- compounds of silicon present in the form of anhydrous silica (Si02) selected from among amorphous silicate, quartz, trymidite, cristoballite, coesite, and anhydrous silicon extracted from a plant; and
- compounds of silicon present in the form of hydrated silica type (Si(OH)₄) selected from among diatomite, radiolarite, opal, gaize, flint, millstone grit, jasper, agate, chert, lutecite, chalcedonite, quartzine, petrified wood, and chalcedony, and materials comprising of opal or chalcedony,
with (ii) an inorganic base or a combination of inorganic bases, optionally with (iii) water added;
a2) a formulation is provided consisting of a compound or a combination of compounds selected from among organic acid salts;
a3) a formulation is provided comprising of an additional crystalline or amorphous mineral or a combination of additional crystalline or amorphous minerals selected from among :
- alumino-silicates;
- aluminates;
- alkaline or alkaline earth carbonates;
- metallic carbonates;
- silicates consisting of pure silica; and
- alkaline earth silicates
such that formulations provided at steps a1) to a3) comprise at least (i) silicon, in the form of anhydrous silica, or (ii) aluminium and (iii) calcium and/or magnesium, said formulation optionally comprising water;
a4) a paste is produced by mixing the formulations provided at steps a1), a2) and a3);
b) the paste obtained from step a) is formed into shape; and
c) the aqueous paste shaped in step b) is hardened by drying at atmospheric pressure, and at a temperature of less than 99°C, until the solid inorganic material is obtained.

2. A method according to claim 1, **characterised in that** the step c) of hardening is followed by a step of baking.

3. A method according to claim 2, **characterised in that** the baking step is carried out at a temperature of less than 1500°C.

4. A method according to claim 1, **characterised in that** quartz is selected from among rock crystal, amethyst, rose quartz, smoky quartz, citrin quartz, milky quartz, prasiolite, aventurine, and fibrous quartz.

5. A method according to claim 1, **characterised in that** the material or materials comprising a compound or combination of compounds of silicon of the anhydrous silica type (SiO₂) are selected from among amorphous silicate, comprising over 20% in moles of SiO₂, compared with the total number of moles of said silicate.

6. A method according to claim 1, **characterised in that** the alumino-silicates are selected from among (i) natural clays or baked clays, (ii) feldspars, (iii) micas, (iv) volcanic glasses, (v) schists, (vi) zeolites, (vii) garnets, (viii) certain amphiboles and (ix) feldspathoids.

7. A method according to claim 6, **characterised in that** the clays are selected from among kaolinite Al₂Si₂O₅(OH)₄, illite KAl₄ [Si₇Al O₂₀], (OH)₄, smectite (1/2 Ca, Na)_{0,7} (Al₄ [(Si, Al)₈ O₂₀](OH)₄.nH₂O, vermiculite (Mg, Ca)_{0,6} Al₆[(SiAl)₈O₂₀](OH)₄.nH₂O, metakaolin 2SiO₂ Al₂O₃ and terracotta.

8. A method according to claim 6, **characterised in that** the felspars are selected from among orthoclase feldspars KAlSi₃O₈ including orthoclase, microcline and sanidine, plagioclase feldspars including albite NaAlSi₃O₈ and anorthite CaAl₂Si₂O₈.

9. A method according to claim 6, **characterised in that** feldsparoid are selected from among nepheline (Na₃,K)AlSiO₄, kalsilite SiAlO₄K, cancrinite or vishnevite (Na,Ca,K)₆₈[Si₆Al₆O₂₄][(SO₄,CO₃,Cl,OH]₁₋₂.nH₂O, leucite KAlSi₂O₆, analcite NaAlSi₂O₆.H₂O, sodalite Na₈Si₆Al₆O₂₄Cl₂, hauinite (Na,Ca)₄₋₈[Si₆Al₆O₂₄](SO₄)₁₋₂, lazurite (Na,Ca)₄₋₈[Si₆Al₆O₂₄](SO₄,S) and noseane Na₈[Si₆Al₆O₂₄](SO₄).

10. A method according to claim 6, **characterised in that** micas are selected from among biotite K(Fe,Mg)₃AlSi₃O₁₀(OH,F)₂, muscovite KAl₂(AlSi₃O₁₀)(OH,F)₂, bromomuscovite KAl₂BSi₃O₁₀(OH,F)₂, hydrobiotite K(Mg,Fe)₉(Si,Al)₈O₂₀(OH)₄.nH₂O, phlogopite KMg₃(AlSi₃O₁₀) (F,OH)₂, lepidolite KLi₂Al(OH,F)₂AlSi₃O₁₀, zinnwaldite KLiFeAl(OH,F)₂, glauconite (K, Ca, Na)_{1,6} (Fe, Al, Mg)₄ Si_{7,3} Al_{0,7} O₂₀ (OH)₄ and paragonite Na₂Al₄ [Si₆Al₂O₂₀](OH)₄.

11. A method according to claim 6, **characterised in that** garnets are selected from among almandine Fe₃Al2(SiO₄)₃, grossular garnet Ca₃Al₂(SiO₄)₃, pyrope garnet Mg₃Al₂(SiO₄)₃, and spessartine garnet Mn₃Al₂(SiO₄)₃.

12. A method according to claim 1, **characterised in that** at step a1) and/or at step a3), silicon is anhydrous silicon extracted from a plant.

13. A method according to claim 12, **characterised in that** said plant is selected from among horsetail (*Equisetum arwense*), bracken, rice straw, reed, papyrus and cereal plants.

14. A method according to one of claims 1 to 13, **characterised in that** at step a1), the inorganic base is selected from among a sodium hydroxide, a potassium hydroxide, a lithium hydroxide, sodium carbonate (Na₂CO₃ or Na₂CO₃.10H₂O), potassium carbonate K₂CO₃ and lithium carbonate Li₂CO₃.

15. A method according to one of claims 1 to 14, **characterised in that** at step a2), one or several additional inorganic compounds selected from among compounds comprising phosphate (PO₄³), nitrate (NO³⁻), fluoride (F⁻) and chloride (Cl⁻) radicals.

16. A method according to claim 15, **characterised in that** additional inorganic compounds are selected from among apatite Ca₅(PO₄)₃ (OH, F, Cl), saltpetre KNO₃, fluorspar CaF₂ and common salt NaCl.

17. A method according to claim 1, **characterised in that** at step a2), sulphuric acid salt is added.

18. A method according to claim 17, **characterised in that** the sulphuric acid salt consists of a gypsum [CaSO₄.2H₂O].

19. A method according to claim 1, **characterised in that** at step a2) for the organic acid salt, said organic acid salt consists of a carboxylic acid salt selected from among alkylcarboxylic acids with from 2 to 20 carbon atoms and arylcarboxylic acids with from 6 to 20 carbon atoms.

20. A method according to claim 19, **characterised in that** the salts of alkylcarboxylic acids and arylcarboxylic acids are selected from among the salts of the following acids : acetic acid [CH₃COOH], benzoic acid [C₆H₅COOH], butanoic acid [CH₃CH₂CH₂COOH], chloroacetic acid [ClCH₂COOH], citric acid [HOOCC(OH)(CH₂COOH)₂], formic acid [HCOOH], fumaric acid [trans-HOOCCH-CHCOOH], glycolic acid [HOCH₂COOH], lactic acid [CH₃CH(OH)COOH], maleic acid [cis-HOOCCH-CHCOOH], malic acid [HOOCCH (OH)CH₂COOH]], malonic acid [HOOCCH₂COOH], mandelic acid [C₆H₅CH5OH)COOH], o-phthalic acid [o-C₆H₄(COOH)₂], oxalic acid [HOOCCOOH], propanoic acid [CH₃CH₂COOH], pyruvic acid [CH₃COCOOH], salicylic acid [o-C₆H₄(OH)COOH], succinic acid [HOOCCH₂CH₂COOH], tartaric acid [HOOCCH(OH)CH(OH)COOH], trichloroacetic acid [CCl₃CCOOH].

21. A method according to claim 20, **characterised in that** the organic acid salt consists of potassium bitartrate C₄H₅O₆K.

22. A method according to claim 1, **characterised in that** at step a3), the aluminate or the aluminates are selected from among gibbsite, alumina and diaspora.

23. A method according to claim 1, **characterised in that** at step a3), the alkaline or alkaline earth carbonate or the alkaline or alkaline earth carbonates are selected from among calcite, dolomite, magnesite and natron.

24. A method according to claim 1, **characterised in that** at step a3) the metallic carbonate or the metallic carbonates are selected from among malachite and rhodochrosite.

25. A method according to claim 1, **characterised in that** at step a3) the silicate or the silicates consisting of pure silica are selected from among quartz, cristoballite, trymidite, coesite and amorphous silica.

26. A method according to claim 1, **characterised in that** at step a3) the alkaline earth silicate or the alkaline earth silicates are selected from among talc, serpentine, asbestos, wollastonite, pyroxenes, olivine, and certain amphiboles.

27. A method according to claim 26, **characterised in that** pyroxenes are selected from among orthopyroxene including enstatite MgSiO₃, aegirine NaFeSi₂O₆, pigeonite (Mg, Fe, Ca) (Mg, Fe)Si₂O₆ and ferrosilite FeSiO₃, a clinopyroxene including diopside CaMgSi₂O₆, augite (Ca,Fe,Mg)(Si,Al)₂O₆, jadeite NaAlSi2O6 and a spodumene LiAlSi₆O₆.

28. A method according to any of the claims 1 to 27, **characterised in that** at step a), zinc oxide [ZnO] is added.

29. An aqueous inorganic paste for producing a solid inorganic material **characterised in that** it consists of a mixture comprising:
a) a paste formulation obtained by reaction of :
(i) a powder of one or more materials comprising a compound or a combination of compounds of silicon selected from among:
- compounds of silicon present in the form of anhydrous silica (SiO₂) selected from among quartz, trymidite, cristoballite, coesite, and anhydrous silicon extracted from a plant; and
- compounds of silicon present in the form of hydrated silica type (Si(OH)₄) selected from among diatomite, radiolarite, opal, gaize, flint, millstone grit, jasper, agate, chert, lutecite, chalcedonite, quartzine, petrified wood, and chalcedony, and materials comprised of opal or chalcedony,
with (ii) an inorganic base or a combination of inorganic bases, optionally with (iii) water added;
b) a formulation consisting of a compound or a combination of compounds selected from among organic acid salts;
c) a formulation comprising of an additional crystalline or amorphous mineral or a combination of additional crystalline or amorphous minerals selected from among :
- alumina-silicates;
- aluminates;
- alkaline or alkaline earth carbonates;
- metallic carbonates;
- silicates consisting of pure silica; and
- alkaline earth silicates
such that formulations a) to c) comprise at least (i) silicon, in the form of anhydrous silica, (ii) aluminium and (iii) calcium and/or magnesium, said formulation optionally comprising water.

30. A basic formulation for producing a solid inorganic material, consisting of a mixture of the formulations a) and b) as follows:
a) a paste formulation obtained by reaction of (i) a powder of one or more materials comprising a compound or a combination of compounds of silicon selected from among :
- compounds of silicon present in the form of anhydrous silica (SiO₂) selected from among amorphous silicate, quartz, trymidite, cristoballite, coesite and anhydrous silicon extracted from a plant; and
- compounds of silicon present in the form of hydrated silica type (Si(OH)₄) selected from among diatomite, radiolarite, opal, gaize, flint, millstone grit, jasper, agate, chert, lutecite, chalcedonite, quartzine, petrified wood, chalcedony, and materials comprising of opal or chalcedony,
with (ii) an inorganic base or a combination of inorganic bases, optionally with (iii) water added;
b) a formulation consisting of a compound or a combination of compounds selected from among organic acid salts.

31. A method for preparing a basic formulation for producing a solid inorganic material, said method consisting of the following steps:
a) a paste formulation obtained by reaction of (i) a powder of one or more materials comprising a compound or a combination of compounds of silicon selected from among :
- compounds of silicon present in the form of anhydrous silica (SiO₂) selected from among amorphous silicate, quartz, trymidite, cristoballite, coesite, and anhydrous silicon extracted from a plant; and
- compounds of silicon present in the form of hydrated silica type (Si(OH)₄) selected from among diatomite, radiolarite, opal, gaize, flint, millstone grit, jasper, agate, chert, lutecite, chalcedonite, quartzine, petrified wood, and chalcedony, and materials comprised of opal or chalcedony,
with (ii) an inorganic base or a combination of inorganic bases, optionally with (iii) water added;
b) a formulation is providing consisting of a compound or a combination of compounds selected from among organic acid salts;
c) said basic formulation is obtained by mixing the formulation provided at step a) with the formulation provided at step b).
